# EUROPEAN PATENT APPLICATION

(11) **EP 4 310 670 A1**
(43) Date of publication of application: **24.01.2024**
(21) Application number: 21931478.8
(22) Date of filing: 16.03.2021
(51) Int. Cl.: G06F 8/76

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: NISHIGAKI, Masaki, Kawasaki-shi, Kanagawa 211-8588 (JP)
(74) Representative: Hoffmann Eitle
(86) International application number: PCT/JP2021/010635
(87) International publication number: WO 2022/195726

(57) **Abstract**

An incompatible description in a source code is efficiently specified.

A storage unit (11) stores incompatibility information (15) that is associated with a pair of software (13, 14) and that indicates conditions about a relationship between and attributes of two or more language elements. A processing unit (12) generates, from a source code (16) that indicates a request to the software (13), a syntax tree (17) that indicates a relationship between a plurality of language elements included in the source code (16) and attributes of each of the plurality of language elements, based on a grammar of a language used for writing the source code (16). The processing unit (12) specifies a description in the source code (16) by searching the syntax tree (17) for a language element that satisfies the conditions indicated by the incompatibility information (15), the description being incompatible with the software (14).

## Description

### Technical Field

The embodiments discussed herein relate to an information processing program, an information processing method, and an information processing apparatus.

### Background Art

Information processing systems executing user programs may use software provided by software vendors. Examples of the software include middleware such as a database management system (DBMS) . A user program may be created to be dependent on such provided software and may transmit requests to the software to invoke functions of the software. For example, the user program may transmit SQL statements to the DBMS.

Information processing systems may change software used thereby. For example, when a software vendor upgrades the version of software, an information processing system may update the software used thereby to a new version. In addition, for example, the information processing system may switch software to the same kind of software provided by another software vendor.

However, when an information processing system changes software used thereby, a problem based on incompatibility between software programs may occur in a user program. For example, when a request is transmitted from a user program to a new software, an error may occur due to different language specifications for writing the request. In addition, for example, functions or performances indicated by the same request may differ between the current software and the new software. Thus, changing the software being used may involve correction of a source code.

There has been proposed a compatibility evaluation method in which an incompatible application programming interface (API) that does not satisfy upgraded specifications is detected in the APIs used by an application program and in which a correction method for eliminating the incompatibility is presented to a user. In addition, there has been proposed a data processing system that processes, based on a common script, data stored in a plurality of database products, each of which has a specific API. Further, there has been proposed a display comparison method that evaluates a difference in screen layout when a plurality of terminal devices having different screen sizes display the same Hyper Text Markup Language (HTML) document.

### Citation List

### Patent Literature

[PTL 1] Japanese Laid-open Patent Publication No. 2013-164879
[PTL 2] Japanese Laid-open Patent Publication No. 2017-120611
[PTL 3] Japanese Laid-open Patent Publication No. 2020-113002

### Summary of Invention

### Technical Problem

When the current software is changed to a new software, a computer may specify a description incompatible with the new software in a source code for the current software and may support the correction of the source code.

However, because incompatibility may have complicated occurrence conditions, it may be difficult to specify the incompatibility only by a simple character string search, such as searching for an instruction word not included in the language specifications of the new software. Therefore, how to accumulate knowledge of incompatibility as information and how to apply the information to the source code are important. In view of the above, it is an object in one aspect of the embodiments to efficiently specify an incompatible description in a source code.

### Solution to Problem

In one aspect, there is provided an information processing program that causes a computer to execute the following process. The process includes generating, from a source code that indicates a request to first software, a syntax tree that indicates a relationship between a plurality of language elements included in the source code and attributes of each of the plurality of language elements, based on a grammar of a language used for writing the source code. The process also includes acquiring incompatibility information that is associated with a pair of the first software and second software and that indicates conditions about a relationship between and attributes of two or more language elements. The process also includes specifying a description in the source code by searching the syntax tree for a language element that satisfies the conditions indicated by the incompatibility information, the description being incompatible with the second software. In another aspect, there is provided an information processing method executed by a computer. In still another aspect, there is provided an information processing apparatus including a storage unit and a processing unit.

### Advantageous Effects of Invention

In one aspect, an incompatible description in a source code is efficiently specified.

The above object and other objects, features, and advantages of the present invention will become apparent by the following description related to the accompanying drawings illustrating suitable embodiments as examples of the present invention.

### Brief Description of Drawings

FIG. 1 illustrates an information processing apparatus according to a first embodiment;
FIG. 2 illustrates a hardware example of an information processing apparatus according to a second embodiment;
FIG. 3 illustrates an example of incompatibility absorption between database products;
FIG. 4 illustrates an example of functions of the information processing apparatus according to the second embodiment;
FIG. 5 illustrates SQL grammar examples;
FIG. 6 illustrates a first example of an SQL syntax tree;
FIG. 7 illustrates a second example of the SQL syntax tree;
FIG. 8 illustrates a first example of a source code including an SQL procedure;
FIG. 9 illustrates the first half of a first example of an SQL procedure syntax tree;
FIG. 10 illustrates the second half of the first example of the SQL procedure syntax tree;
FIG. 11 illustrates a second example of the source code including an SQL procedure;
FIG. 12 illustrates the first half of a second example of an SQL procedure syntax tree;
FIG. 13 illustrates the second half of the second example of the SQL procedure syntax tree;
FIG. 14 illustrates an example of attribute information;
FIG. 15 illustrates an example of a syntax table;
FIG. 16 illustrates an example of a keyword table;
FIG. 17 illustrates an example of a statement-level syntax tree;
FIG. 18 is a graph illustrating an example of a relationship among database products;
FIG. 19 illustrates an example of an edge table;
FIG. 20 illustrates an example of an incompatibility master table;
FIG. 21 illustrates an example of an incompatibility name, unique conditions, and rewriting target;
FIG. 22 illustrates an example of an instruction table;
FIG. 23 illustrates an example of CREATE information;
FIG. 24 illustrates a first example of incompatibility information;
FIG. 25 illustrates a second example of the incompatibility information;
FIG. 26 illustrates an example of a rewriting result of a syntax tree;
FIG. 27 is a flowchart illustrating a procedure example of incompatibility absorption;
FIG. 28 is the first half of a flowchart illustrating a procedure example of SQL procedure decomposition;
FIG. 29 is the second half of the flowchart illustrating the procedure example of the SQL procedure decomposition;
FIG. 30 is a first flowchart illustrating a procedure example of statement decomposition;
FIG. 31 is a second flowchart illustrating the procedure example of the statement decomposition;
FIG. 32 is a third flowchart illustrating the procedure example of the statement decomposition;
FIG. 33 is a fourth flowchart illustrating the procedure example of the statement decomposition;
FIG. 34 is a fifth flowchart illustrating the procedure example of the statement decomposition; and
FIG. 35 is a flowchart illustrating a procedure example of current node tracing.

### Description of Embodiments

Hereinafter, embodiments will be described with reference to the drawings.

### [First Embodiment]

A first embodiment will be described.

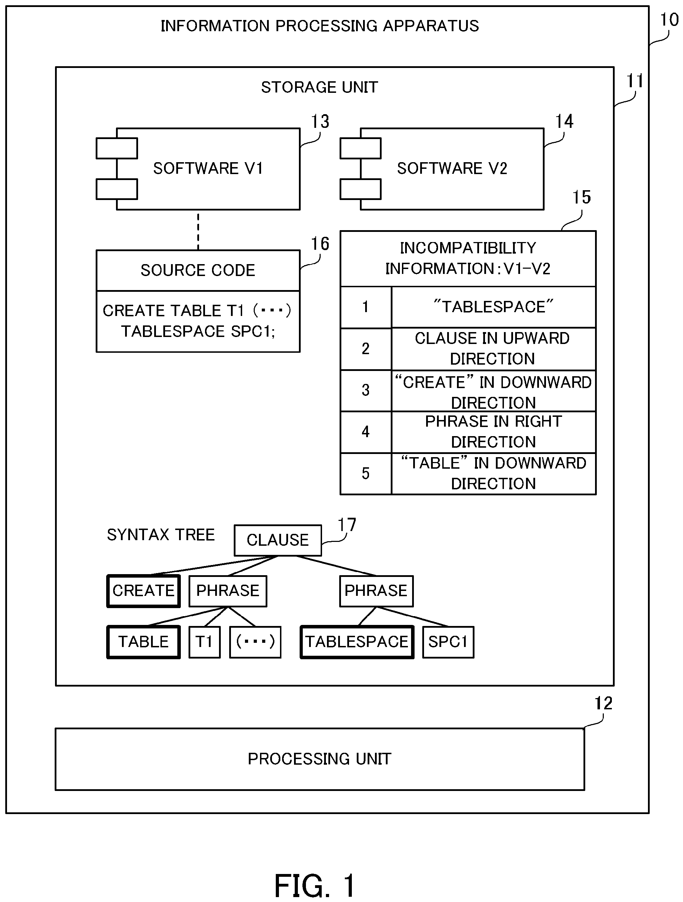

FIG. 1 illustrates an information processing apparatus according to the first embodiment.

When software used by an information processing system is changed, an information processing apparatus 10 according to the first embodiment analyzes a source code and specifies a description that is incompatible with a new software in the source code. In this way, the information processing apparatus 10 supports the operation for changing the software. The information processing apparatus 10 may be a client apparatus or a server apparatus. The information processing apparatus 10 may be referred to as a computer, an analysis apparatus, a development support apparatus, or the like.

The information processing apparatus 10 includes a storage unit 11 and a processing unit 12. The storage unit 11 may be a volatile semiconductor memory such as a random access memory (RAM) or may be a non-volatile storage such as a hard disk drive (HDD) or a flash memory. The processing unit 12 is, for example, a processor such as a central processing unit (CPU), a graphical processing unit (GPU), or a digital signal processor (DSP). The processing unit 12 may include an electronic circuit for specific purposes, such as an application specific integrated circuit (ASIC) or a field programmable gate array (FPGA). For example, the processor executes a program stored in a memory such as a RAM. A group of processors may be referred to as a multi-processor or simply "processor".

The storage unit 11 stores incompatibility information 15. The incompatibility information 15 is associated with a pair of software 13 and software 14. The software 13 is migration-source software, and software 14 is migration-destination software. The incompatibility information 15 is knowledge information in which knowledge for specifying a description that is incompatible with the software 14 in the source code for the software 13 is expressed in a certain format.

The software 13 and 14 may be software products provided by a software vendor or may be middleware such as DBMSs. The software 13 and 14 may be the same kind of software provided by different software vendors. The software 13 and 14 may be different versions of software provided by the same software vendor. The languages for writing requests to the software 13 and 14 may be similar but not identical. For example, although supporting a general-purpose query language such as the SQL, the software 13 and 14 may have extended query languages on their own.

The incompatibility information 15 indicates conditions about a set of two or more language elements. These conditions are defined based on a syntax tree, which will be described below. The presence of a language element satisfying the conditions indicated by the incompatibility information 15 means that an incompatible description is included in the source code. The language element is a syntactic unit element such as a statement, a clause, a phrase, or a word. The language element may be referred to as a syntactic element. An inclusion relation may be established between different language elements. For example, a statement may include a clause, a clause may include a phrase, or a phrase may include a word.

The incompatibility information 15 indicates conditions about a relationship between two or more language elements and attributes of these two or more language elements. The attributes of a language element may include location information indicating the location of the language element, the type of the language element, and the character string of the language element. For example, the incompatibility information 15 may indicate a condition that a word having a certain character string and a phrase having a certain type are in an inclusion relation.

The incompatibility information 15 may include an instruction sequence indicating a procedure for searching the syntax tree for a set of language elements satisfying the conditions. When the instruction sequence included in the incompatibility information 15 is executed sequentially and successfully from the top instruction to the last instruction, it may be determined that a set of incompatible language elements has been detected. In addition, the incompatibility information 15 may include a first condition indicating the attributes of a language element serving as a starting point, a second condition indicting the range of a relationship to be traced from the starting point, and a third condition indicating the attributes of a language element in the relationship traced.

The storage unit 11 stores a source code 16. The source code 16 indicates a request to the software 13. The source code 16 is written in a formal language such as a programming language. The source code 16 is written in a high-level language in which a minimum language element is expressed as a character string. The source code 16 may be an SQL statement written in SQL or may be an SQL procedure code written in a programming language that matches the SQL.

The processing unit 12 performs syntax analysis on the source code 16 based on the grammar of the language used for writing the source code 16 and generates a syntax tree 17 from the source code 16. The syntax tree 17 indicates a relationship between a plurality of language elements included in the source code 16 and attributes of each of the plurality of language elements. When generating the syntax tree 17, the processing unit 12 does not need to perform semantic analysis on the source code 16. As long as the syntax tree 17 includes format information such as the appearance order and the inclusion relation of the plurality of language elements, the syntax tree 17 does not need to include semantic information such as logical meaning of the plurality of language elements.

When the processing unit 12 generates the syntax tree 17, the processing unit 12 searches the syntax tree 17 for a set of language elements satisfying the conditions indicated by the incompatibility information 15. If the processing unit 12 has detected a set of language elements satisfying the conditions in the syntax tree 17, the processing unit 12 determines that the source code 16 includes an incompatible description. In this way, the processing unit 12 specifies a description in the source code 16, the description being incompatible with the software 14.

For example, the processing unit 12 searches the syntax tree 17 for a word having a character string "TABLESPACE". Next, the processing unit 12 searches for a clause in the upward direction (a root node direction, a parent node direction) from the word. Next, the processing unit 12 searches for a word having a character string "CREATE" in the downward direction (a leaf node direction, a child node direction) from the clause. Next, the processing unit 12 searches for a phrase in the right direction from the word. Finally, the processing unit 12 searches for a word having a character string "TABLE" in the downward direction from the phrase. By successfully executing these five instructions, the processing unit 12 detects a syntax CREATE TABLE ... TABLESPACE. The processing unit 12 determines that the detected syntax is incompatible with the software 14.

The incompatibility information 15 may further indicate a rewriting method for rewriting a language element that satisfies the conditions in the syntax tree. In this case, the processing unit 12 may generate a source code in which the incompatibility has been eliminated, that is, a source code indicating a request to the software 14, by applying the rewriting method in the incompatibility information 15 to the syntax tree 17. The rewriting method may be defined as an instruction sequence, as with the search method for a language element satisfying the conditions. For example, the processing unit 12 may delete the phrase containing the word having the character string "TABLESPACE" from the syntax tree 17. As a result, a source code from which "TABLESPACE SPC1" has been deleted is generated.

As described above, the information processing apparatus 10 according to the first embodiment generates the syntax tree 17 from the source code 16 for the software 13 and searches the syntax tree 17 for a language element that satisfies the conditions indicated by the incompatibility information 15 associated with the pair of software 13 and 14. As a result, the information processing apparatus 10 automatically specifies an incompatible description in the source code 16 and supports the migration from the software 13 to the software 14.

In addition, the incompatibility information 15 defines the characteristics of incompatibility appearing in the syntax tree. Therefore, even incompatibility having complicated conditions dependent on the context is objectively expressed in a unified format in the incompatibility information 15. Therefore, the accuracy of the incompatibility information 15 is improved, and the reusability of the incompatibility information 15 is also improved. Further, the information processing apparatus 10 efficiently specifies an incompatible description in the source code 16 by searching the syntax tree 17.

The information processing apparatus 10 uses a syntax tree in which formal structures such as the order and the inclusion relation of language elements are focused. Therefore, the information processing apparatus 10 easily and widely applies the incompatibility information 15 to source codes for various kinds of software, such as software having extended language specifications and software having different semantic interpretations of words.

### [Second Embodiment]

Next, a second embodiment will be described.

An information processing apparatus 100 according to the second embodiment analyzes a source code of a user program using a database product and supports the correction operation performed when the database product used is changed. Examples of the change of the database product may include a change between database products provided by different software vendors and a change between different versions of software provided by the same software vendor. Different database products may have incompatibility therebetween. Correcting the source code so as to eliminate problems caused by the incompatibility may be referred to as incompatibility absorption. The information processing apparatus 100 supports this incompatibility absorption. The information processing apparatus 100 may be a client apparatus or a server apparatus. The information processing apparatus 100 may be referred to as a computer, an analysis apparatus, a development support apparatus, or the like.

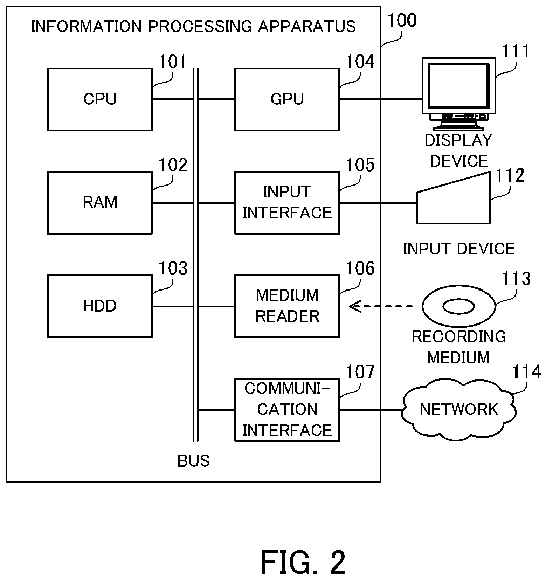

FIG. 2 illustrates a hardware example of the information processing apparatus according to the second embodiment.

The information processing apparatus 100 includes a CPU 101, a RAM 102, an HDD 103, a GPU 104, an input interface 105, a media reader 106, and a communication interface 107, which are connected to a bus. The CPU 101 corresponds to the processing unit 12 according to the first embodiment. The RAM 102 or the HDD 103 corresponds to the storage unit 11 according to the first embodiment.

The CPU 101 is a processor that executes program commands. The CPU 101 executes a program by loading at least part of the programs and data stored in the HDD 103 to the RAM 102. The information processing apparatus 100 may include a plurality of processors. A group of processors may be referred as a multi-processor or simply "processor".

The RAM 102 is a volatile semiconductor memory that temporarily stores a program executed by the CPU 101 and data used by the CPU 101 for calculation. The information processing apparatus 100 may include a different kind of volatile memory other than a RAM.

The HDD 103 is a non-volatile storage that stores an operating system (OS), middleware, software programs such as application software, and data. The information processing apparatus 100 may include a different kind of non-volatile storage, such as a flash memory or a solid state drive (SSD).

The GPU 104 generates an image in coordination with the CPU 101 and outputs the image to a display device 111 connected to the information processing apparatus 100. Examples of the display device 111 include a cathode ray tube (CRT) display, a liquid crystal display, an organic electro-luminescence (EL) display, and a projector. A different kind of output device such as a printer may be connected to the information processing apparatus 100.

The input interface 105 receives an input signal from an input device 112 connected to the information processing apparatus 100. Examples of the input device 112 include a mouse, a touch panel, and a keyboard. A plurality of input devices may be connected to the information processing apparatus 100.

The media reader 106 is a reading device that reads out a program and data recorded in a recording medium 113. Examples of the recording medium 113 include a magnetic disk, an optical disc, and a semiconductor memory. For example, the magnetic disk is a flexible disk (FD) or an HDD. For example, the optical disc is a compact disc (CD) or a digital versatile disc (DVD). For example, the media reader 106 copies the program and data read out from the recording medium 113 to another recording medium such as the RAM 102 or the HDD 103. The read program may be executed by the CPU 101.

The recording medium 113 may be a portable recording medium and may be used for distribution of the program and data. The recording medium 113 and the HDD 103 may each be referred to as a computer-readable recording medium.

The communication interface 107 is connected to a network 114 and communicates with other information processing apparatuses via the network 114. The communication interface 107 may be a wired communication interface connected to a wired communication device such as a switch or a router. Alternatively, the communication interface 107 may be a wireless communication interface connected to a wireless communication device such as a base station or an access point.

Next, the incompatibility absorption using the information processing apparatus 100 will be described.

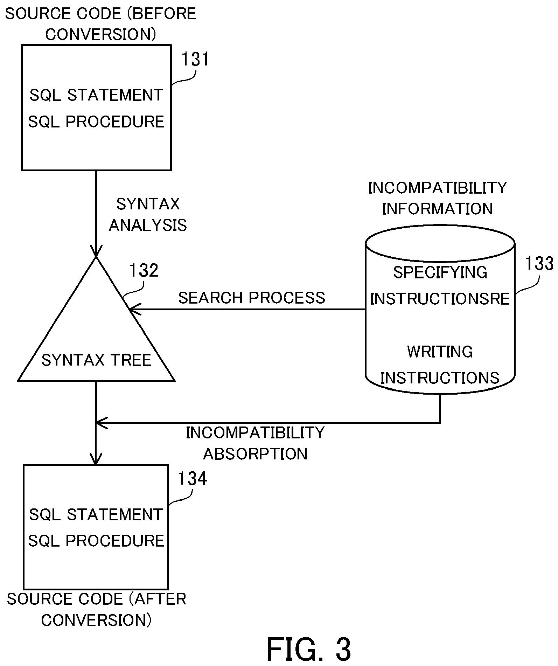

FIG. 3 illustrates an example of the incompatibility absorption between database products.

The information processing apparatus 100 acquires a source code 131 that is dependent on a migration-source database product. The source code 131 includes an SQL statement or an SQL procedure code. The SQL statement is a database query written in SQL. Although the basic specifications of the SQL are standardized, some database products have their own unique specifications developed by extending the basic specifications. The SQL procedure code is a program written in a procedural language that is defined to match the SQL and operates as a stored procedure.

The information processing apparatus 100 performs syntax analysis on the source code 131 and generates a syntax tree 132. The syntax tree 132 is a tree-type data indicating the structure of language elements such as a statement, a clause, a phase, and a word. The syntax tree 132 generated through the syntax analysis is capable of expressing a context in which each word in the source code 131 appears, unlike the case in which only lexical analysis is performed. For example, in an SQL statement or an SQL procedure code, the same variable may have a different effective range depending on the location where the variable is written. Therefore, the syntax tree 132 that expresses the context is useful in incompatibility absorption.

However, the information processing apparatus 100 does not need to perform semantic analysis on the source code 131, and the syntax tree 132 does not need to include semantic information indicating the logical meaning of the language elements. A compiler may perform semantic analysis on a source code and add semantic information to a syntax tree, to detect a description error of the source code or to optimize the source code. In contrast, the incompatibility absorption is performed on the assumption that a user program corresponding to the source code 131 operates normally, and the importance of the semantic information is low. In addition, the logical meaning of the words included in the source code 131 may be dependent on the language specifications unique to the database product. Thus, omitting the semantic analysis makes it easier for the information processing apparatus 100 to support various database products.

The information processing apparatus 100 holds incompatibility information 133 associated with a pair of a migration-source database product and a migration-destination database product as knowledge information. Database products of different product series are handled as different types of database products, as if they were database products sold by different software vendors. In addition, even if database products belong to the same product series, if the database products are different versions, these database products are handled as different types of database products. The individual database product may be identified by a combination of a product name and a version number.

The incompatibility information 133 includes a sequence of specifying instructions and a sequence of rewriting instructions. The specifying instructions are instructions for specifying an incompatible portion in the syntax tree 132, the incompatible portion normally operating in the migration-source database product but possibly causing a problem in the migration-destination database product. The rewriting instructions are instructions for rewriting the incompatible portion specified by the specifying instructions in the syntax tree 132 such that a problem will occur in the migration-destination database product.

The information processing apparatus 100 performs a search process on the syntax tree 132 by executing the specifying instructions included in the incompatibility information 133. When an incompatible portion is detected in the syntax tree 132 by the specifying instructions, the information processing apparatus 100 performs the incompatibility absorption by executing the rewriting instructions included in the incompatibility information 133 on the syntax tree 132. In this way, the information processing apparatus 100 converts the syntax tree 132 such that the incompatibility is eliminated.

Next, the information processing apparatus 100 generates a source code 134 from the converted syntax tree 132. The source code 134 is a result of the incompatibility absorption performed on the source code 131 and is a source code for the migration-destination database product. The source code 134 includes, as with the source 131, an SQL statement or an SQL procedure code.

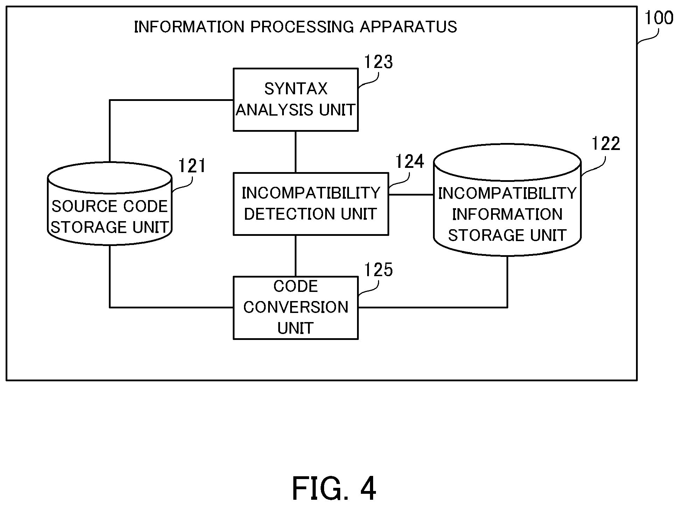

FIG. 4 illustrates an example of functions of the information processing apparatus according to the second embodiment.

The information processing apparatus 100 includes a source code storage unit 121, an incompatibility information storage unit 122, a syntax analysis unit 123, an incompatibility detection unit 124, and a code conversion unit 125. The source code storage unit 121 and the incompatibility information storage unit 122 are each implemented by using, for example, the RAM 102 or the HDD 103. The syntax analysis unit 123, the incompatibility detection unit 124, and the code conversion unit 125 are each implemented by using, for example, the CPU 101 and a program.

The source code storage unit 121 stores an unconverted source code. The source code includes an SQL statement or an SQL procedure code. The unconverted source code may be entered to the information processing apparatus 100 by a user or may be received from another information processing apparatus. The source code storage unit 121 stores a converted source code. The converted source code is generated by the information processing apparatus 100.

The incompatibility information storage unit 122 accumulates incompatibility information as knowledge information indicating technical know-how about the incompatibility absorption. The incompatibility information is associated with a pair of a migration-source database product and a migration-destination database product. The incompatibility information includes specifying instructions indicating a procedure for detecting an incompatible portion in a syntax tree and also includes rewriting instructions indicating a procedure for eliminating the incompatible portion from the syntax tree. The incompatibility information storage unit 122 also stores management information for managing the incompatibility information.

The syntax analysis unit 123 receives an incompatibility absorption command from the user. This incompatibility absorption command includes identification information about a migration-source database product and identification information about a migration-destination database product. Further, the incompatibility absorption command includes an option indicating whether to automatically execute the rewriting instructions after the specifying instructions. When receiving the incompatibility absorption command, the syntax analysis unit 123 reads out an unconverted source code from the source code storage unit 121. The syntax analysis unit 123 performs syntax analysis on an SQL statement or an SQL procedure code included in the unconverted source code, generates a syntax tree, and provides the syntax tree to the incompatibility detection unit 124.

The incompatibility detection unit 124 reads out the incompatibility information associated with a pair of the specified migration-source database product and migration-destination database product from the incompatibility information storage unit 122. The incompatibility detection unit 124 executes the specifying instructions included in the incompatibility information on the syntax tree generated by the syntax analysis unit 123, to detect an incompatible portion in the syntax tree.

The incompatibility detection unit 124 outputs information indicating the detected incompatible portion. Of all the character strings included in the unconverted source code, the incompatibility detection unit 124 may highlight a character string corresponding to the incompatible portion that has been detected in the syntax tree. The incompatibility detection unit 124 may display the information about the incompatible portion on the display device 111, may store the information in a nonvolatile storage such as the HDD 103, or may transmit the information to another information processing apparatus. However, if the rewriting instructions are automatically executed, the incompatibility detection unit 124 may omit outputting the information about the incompatible portion.

If the automatic execution of the rewriting instructions is instructed, after the execution of the specifying instructions, the code conversion unit 125 executes the rewriting instructions included in the incompatibility information on the syntax tree and rewrites the syntax tree. The code conversion unit 125 reproduces a source code from the converted syntax tree and stores the converted source code in the source code storage unit 121. Of all the character strings included in the converted source code, the code conversion unit 125 may highlight the character string that has been corrected by the incompatibility absorption. The code conversion unit 125 may display the converted source code or the information about the correction content on the display device 111 or may transmit the above information to another information processing apparatus.

Next, a syntax tree generated by the syntax analysis will be described.

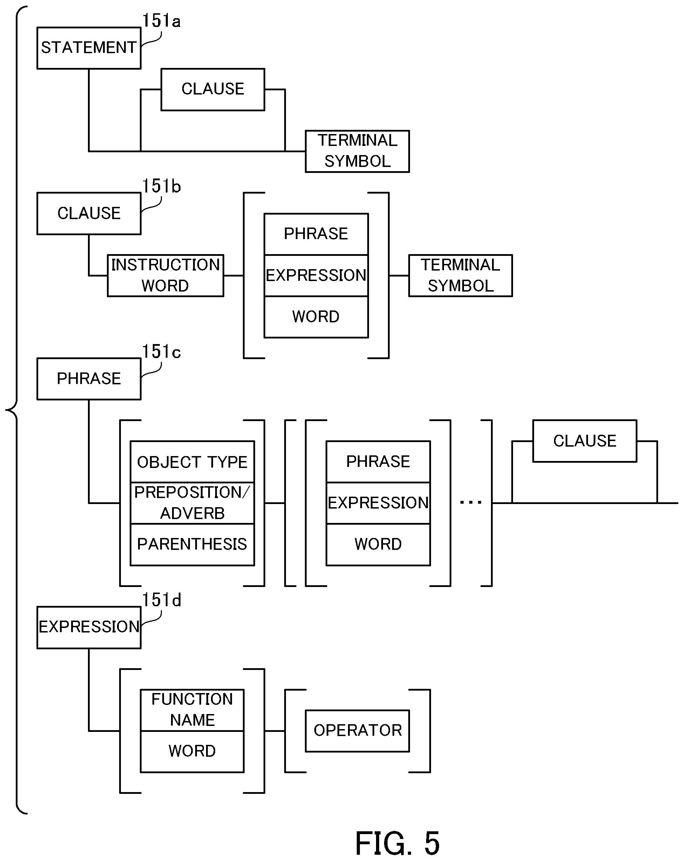

FIG. 5 illustrates SQL grammar examples.

Graphs 151a, 151b, 151c, and 151d represent SQL syntax rules. The graph 151a represents the structure of an SQL statement. The graph 151b represents the structure of an SQL clause. The graph 151c represents the structure of an SQL phrase. The graph 151d represents the structure of an SQL expression. In FIG. 5, a branch line that branches off from a main stream line indicates that a language element on the branch line may be optional. Parentheses are selection symbols indicating that one of the language elements in the parentheses is to be selected. A three-point leader indicates that the immediately preceding language element may appear one or more times.

As represented by the graph 151a, a statement includes a terminal symbol at the end. The statement may include a clause before the terminal symbol. As represented by the graph 151b, a clause includes an instruction word at the head and includes a terminal symbol at the end. A clause also includes a phrase, an expression, or a word between the instruction word and the terminal symbol. As represented by the graph 151c, a phrase includes an object type, a preposition/adverb, or parentheses at the head. Subsequently, the phrase includes a phrase, an expression, or a word, which may be followed by another phrase, expression, or word. This repetition may continue a plurality of times. The phrase may subsequently include a clause. As represented by the graph 151b, an expression includes a function name or a word, and subsequently includes an operator.

Next, SQL language elements will be described.

A quotation mark is a certain symbol, such as ", defined per database product. A character string sandwiched by two quotation marks is handled as a word. A delimiter is a symbol for separating words from each other. The delimiter may be a blank or a comma (","). In the examples of the syntax tree according to the second embodiment, the blank may be omitted. A terminal symbol represents the end of a statement. The terminal symbol may be a semicolon (";"). In the examples of the syntax tree according to the second embodiment, the terminal symbol may be written as "terminal".

A word is the smallest language unit having a meaning in a statement. Examples of the word include an identifier, a reserved word, a function name, and an operator. Examples of the identifier include an unquoted identifier, which is a variable name without quotation marks, and a quoted identifier, which is a character string with quotation marks. Examples of the reserved word include an instruction word, an object type, and other reserved words. The instruction word represents an instruction such as CREATE and UPDATE. The object type represents a type of object such as TABLE. The other reserved words are reserved words, such as BEGIN, other than the instruction word and the object type.

A compound instruction is a kind of reserved word in which two or more instruction words are selectively arranged, such as CREATE OR REPLACE. In the examples of the syntax tree according to the second embodiment, two or more instruction words included in a compound instruction are connected and placed in the vertical direction. A consecutively reserved word is another kind of reserved word in which two or more object types are sequentially arranged, such as PACKAGE BODY. In the examples of the syntax tree according to the second embodiment, two or more object types included in a consecutively reserved word are associated with each other by being linked in the horizontal direction.

Examples of the function name include a system function name and a user-defined function name. The system function name is the name of a system function that is usable without being defined by the user. The user-defined function name is the name of a function that is explicitly defined by the user. Examples of the operator include various operators such as an assignment operator (":=") and a logical sum operator ("I I") . Examples of the expression include a set of words connected by an operator and a set of a word and an expression connected by an operator. Examples of the expression also include a set of a function name and an argument. The argument is sandwiched by an opening parenthesis ("(") and a closing parenthesis (")").

Examples of the phrase include a general phrase, a predicate phrase, a suffix phrase, a definition phrase, and an unclassified phrase. The general phrase is a set of a modifier and an object. The modifier and the object have an equivalent relationship. For example, a set of an object type and an identifier, such as TABLE T1, is a general phrase. Examples of the predicate phrase include a set of a preposition and an object, such as FROM T1 and AS T2. Examples of the predicate phrase also include a set of an adverb and an object, such as WHERE C1. The suffix phrase is an individually specified portion sandwiched by an opening parenthesis and a closing parenthesis. The suffix phrase may be used to specify a data type and a key column.

The definition phrase is a language element for specifying the type of a variable and includes a word other than a reserved word and a reserved word representing a data type. The definition phrase may be used together with a suffix phrase representing detailed type information. There is a case in which a clause including a definition phrase does not explicitly appear in a statement. In this case, it is recognized that, when a syntax tree is generated in the second embodiment, a DECLARE instruction immediately before the definition phrase is omitted and that a clause including the DECLARE instruction at the head exists.

The unclassified phrase is a clause that does not match any one of the general phrase, the predicate phrase, the suffix phrase, and the definition phrase described above. A word string that is immediately below a clause and does not meet the conditions about the other phrases is classified as an unclassified phrase. When a new database product is released, a new phrase used in the new database product may be classified as an unclassified phrase. The number of unclassified phrases may be reduced as the syntax analysis unit 123 is updated such that the new database product is supported.

In the examples of the syntax tree according to the second embodiment, a general phrase may be represented as "phrase", a predicate phrase may be represented as "predicate", a suffix phrase may be represented as "suffix", a definition phrase is represented as "definition", and an unclassified phrase may be represented as "unclassified". A clause includes an instruction word at the head and represents the content of an instruction. A statement includes a clause and a terminal symbol at the end.

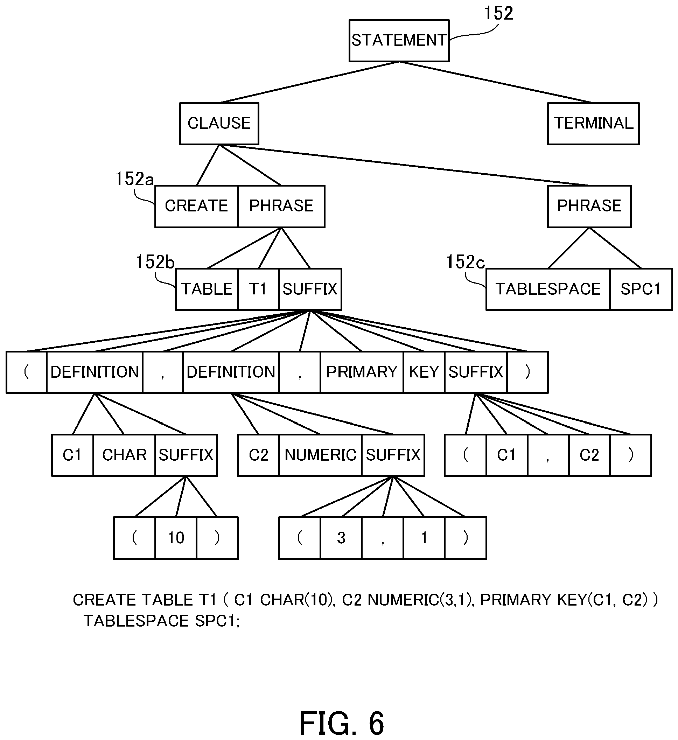

FIG. 6 illustrates a first example of an SQL syntax tree.

A syntax tree 152 represents the syntax of an SQL statement, which is CREATE TABLE T1(C1 CHAR(10), C2 NUMERIC(3,1), PRIMARY KEY(C1,C2)) TABLESPACE SPC1;. The syntax tree 152 is a tree-structured undirected graph. The syntax tree 152 includes a plurality of nodes, each of which represents a language element, and includes a plurality of edges connecting the plurality of nodes to form the tree structure. An edge between a high-level node and a low-level node represents that the language element corresponding to the low-level node is included in the language element corresponding to the high-level node. Within the same level, the order of appearance of a plurality of language elements is maintained. A language element corresponding to a left node appears before a language element corresponding to a right node. A leaf node represents a word and corresponds to a character string in the SQL statement.

The syntax tree 152 includes nodes 152a, 152b, and 152c. The node 152a represents an instruction word at the head of a clause and corresponds to a character string CREATE. The node 152b represents the object type of the first phrase included in the clause and corresponds to a character string TABLE. The node 152c represents the object type of the second phrase included in the clause and corresponds to a character string TABLESPACE. As will be described below, each node has attributes such as the type and value of the corresponding language element. In the examples of the syntax tree according to the second embodiment, only some of the attributes are displayed.

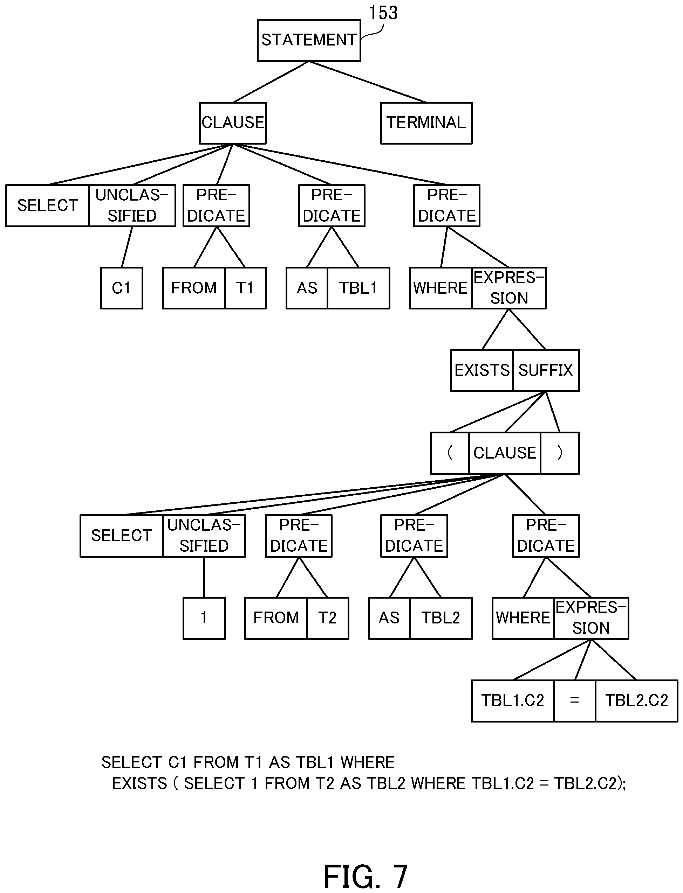

FIG. 7 illustrates a second example of the SQL syntax tree.

A syntax tree 153 represents the syntax of an SQL statement, which is SELECT C1 FROM T1 AS TBL1 WHERE EXISTS(SELECT 1 FROM T2 AS TBL2 WHERE TBL1.C2=TBL2.C2);. This SQL statement includes a subquery and has a more complex syntax than the SQL statement in FIG. 6.

Next, the syntax analysis of an SQL procedure code will be described. A database product may define an SQL procedural language for writing a set of data processes so as to allow a user program to concisely request the database for a complex data process. The SQL procedural language is a procedural programming language that varies depending on the database product. However, the SQL procedural language often has a grammar similar to that of the SQL. Thus, the syntax analysis unit 123 adds some language elements for expressing the syntax of the SQL procedure code and generates a syntax tree common to the SQL statement and the SQL procedure code. As a result, the versatility of the incompatibility detection unit 124 and the code conversion unit 125 is improved.

The SQL procedure includes a control statement, a section, a block, and a module as language elements, in addition to the SQL language elements described above. The control statement is a statement representing a control structure such as a conditional branch or a loop. Examples of the control statement include control words and phrases such as IF, WHEN, IN, THEN, ELSE, END IF, LOOP, and END LOOP. The section is an area in the source code and is sandwiched by certain keywords. The section is included in a block. Examples of the word representing the head or the end of the section include DECLARE, BEGIN, EXCEPTION, END, AS, and IS.

The block is an area in the source code that includes at least one section or block. Examples of the block include a FUNCTION block, a PROCEDURE block, and an unnamed block to which no block name is given. The module is a unit representing the entire source code. One module corresponds to one physical file. The syntax analysis unit 123 determines the language type of the source code based on the extension of the file name or the declaration at the head of the source code. The language type is the SQL or SQL procedure language.

A boundary of a control statement, a section, a block, or a module is determined by a certain keyword. However, it is assumed that EOF (End Of File) is included at the end of the source code. For example, an area from IF to END IF or an area from DECLARE to BEGIN is extracted from the source code. In the syntax tree, a node representing a control statement, a section, a block, or a module is assigned a keyword at the head of the area. Under this node, language elements are expanded until the next keyword appears.

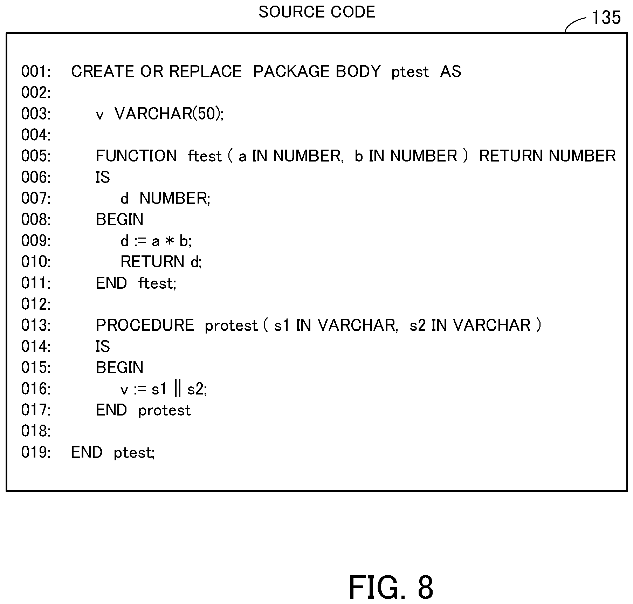

FIG. 8 illustrates a first example of a source code including an SQL procedure.

A source code 135 is formed by 19 lines of SQL procedure codes including empty lines. CREATE OR REPLACE in line 1 is a compound instruction. PACKAGE BODY in line 1 is a consecutively reserved word. AS in line 1 is a keyword representing the head of a section. However, the character string before AS is not completed as a statement. Thus, the syntax analysis unit 123 adds a terminal symbol immediately before AS and recognizes CREATE OR REPLACE PACKAGE BODY ptest; as one statement.

v VARCHAR(50) in line 3 is a definition phrase. However, v VARCHAR(50) is not used as part of a clause including an instruction word. In a case in which a clause including a definition phrase does not explicitly appear in the source code, the syntax analysis unit 123 recognizes that the instruction word DECLARE is omitted. That is, the syntax analysis unit 123 adds an instruction word such that the clause includes the instruction word and the definition phrase.

FUNCTION in line 5 is a reserved word representing the object type. In SQL, FUNCTION may be used as an element of a phrase together with an instruction word, such as CREATE FUNCTION. In the SQL procedure, FUNCTION may be used as a keyword representing the head of a block. Thus, the syntax analysis unit 123 generates a syntax tree while distinguishing FUNCTION included in an SQL statement and FUNCTION included in an SQL procedure code from each other in terms of context.

IN in line 5 is a word declaring that an argument is an input and is used in a context different from that of IN of the SQL. Thus, when IN and a data type consecutively appear in the suffix phrase of a FUNCTION block or a PROCEDURE block in an SQL procedure code, the syntax analyzing unit 123 recognizes these two words as a consecutively reserved word. RETURN NUMBER in line 5 is a clause including an instruction word at the head. However, RETURN NUMBER does not include a phrase following the instruction word. Thus, the syntax analysis unit 123 recognizes that the RETURN instruction will return a value of a NUMBER type and an actual value is not yet determined. That is, the syntax analysis unit 123 adds TBD (To Be Determined) after the data type and recognizes that a phrase including the data type and the value follows the instruction word.

RETURN d; in line 10 includes an instruction word at the head, as with the case described above. However, RETURN d; does not include a phrase following the instruction word. In this case, the instruction word is followed by an identifier, which is not a reserved word. Thus, the syntax analysis unit 123 adds EST (Established), which indicates that the data type has been defined, and recognizes that a phrase including the data type and the value follows the instruction word.

END in line 11 is a keyword representing a section break. However, END is followed by the name of the FUNCTION block and a terminal symbol. Thus, the syntax analysis unit 123 recognizes that a clause including the END instruction is omitted in the END section and adds a clause accordingly. In addition, the syntax analysis unit 123 adds EST, which indicates that the data type has been defined, and recognizes that a phrase including the data type and the name of FUNCTION follows the END instruction. In this way, the syntax analysis unit 123 generates a syntax tree from the source code 135.

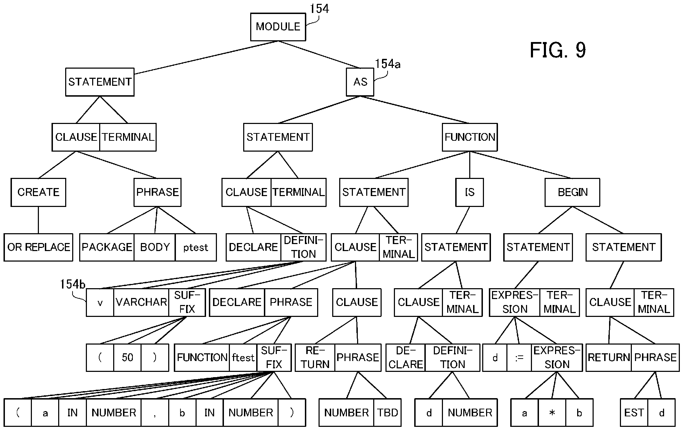

FIG. 9 illustrates the first half of a first example of a SQL procedure syntax tree.

A syntax tree 154 is generated from the source code 135. FIG. 9 illustrates the first half of the syntax tree 154. The syntax tree 154 includes nodes 154a and 154b. The node 154a corresponds to the keyword AS in line 1 of the source code 135. The node 154b corresponds the variable name v in line 3 of the source code 135.

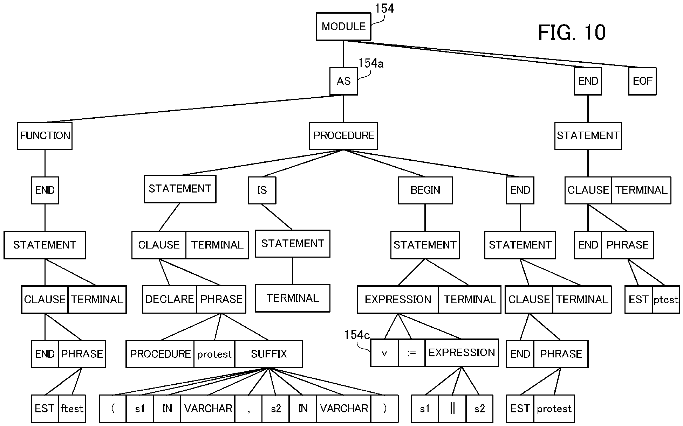

FIG. 10 illustrates the second half of the first example of the SQL procedure syntax tree.

FIG. 10 illustrates the second half of the syntax tree 154. The syntax tree 154 includes a node 154c. The node 154c corresponds to the variable name v in line 16 of the source code 135.

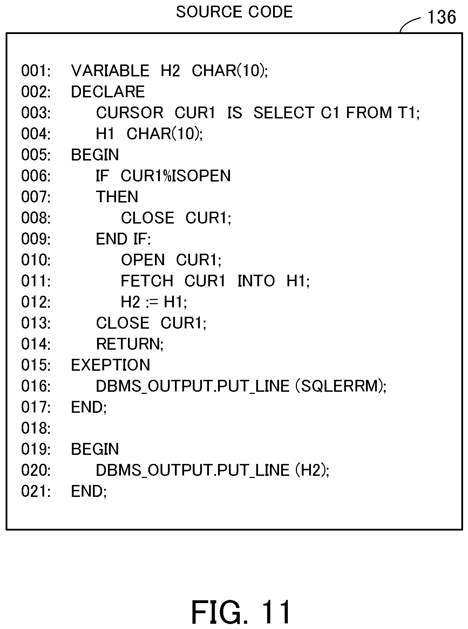

FIG. 11 illustrates a second example of the source code including an SQL procedure.

A source code 136 is formed by 21 lines of SQL procedure codes including an empty line. CURSOR in line 3 is a reserved word representing a cursor and is used without an instruction word. The syntax analysis unit 123 recognizes that an instruction word DECLARE is omitted and adds a clause including DECLARE at the head. Thus, the clause including the instruction word followed by the phrase CURSOR CUR1 is formed.

CLOSE CUR1; in line 8 is a statement that begins with an instruction word CLOSE and ends with a terminal symbol. However, CUR1 between the instruction word and the terminal symbol is a single identifier and is not a phrase. Thus, the syntax analysis unit 123 adds EST (Established), which indicates that the data type has been defined, and recognizes that a phrase including the data type and a value follows the instruction word. In this way, the syntax analysis unit 123 generates a syntax tree from the source 136.

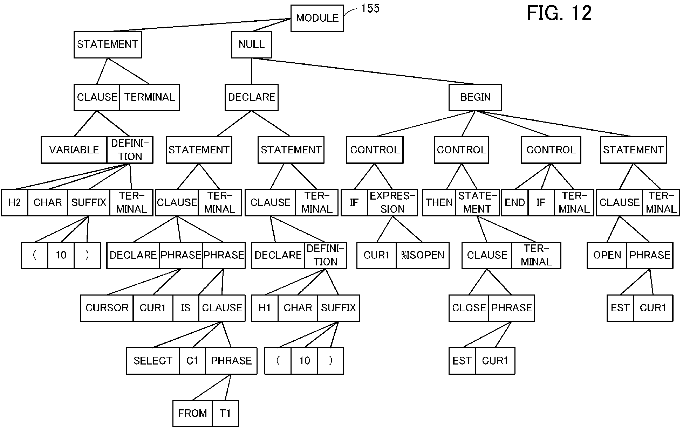

FIG. 12 illustrates the first half of a second example of an SQL procedure syntax tree.

A syntax tree 155 is generated from the source code 136. FIG. 12 illustrates the first half of the syntax tree 155.

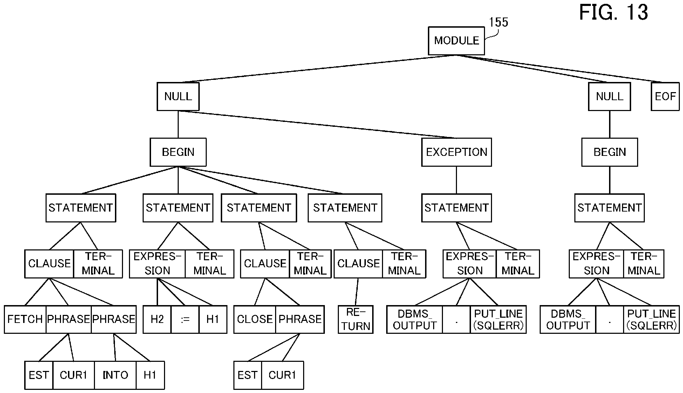

FIG. 13 illustrates the second half of the second example of the SQL procedure syntax tree.

FIG. 13 illustrates the second half of the syntax tree 155.

Next, the data structure of a syntax tree will be described in detail. One syntax tree may include information about a plurality of modules corresponding to a plurality of source codes. In that case, the root node of the syntax tree is a system node that serves to coordinate the plurality of modules. A plurality of module nodes are placed under the system node. Statement nodes, clause nodes, phrase nodes, and word nodes are hierarchically placed under each of the module nodes.

The individual module node may include, as attribute information, information such as a module name and a revision number for identifying a corresponding source code. The individual word node at the end of the syntax tree may include, as attribute information, a line number representing the appearance location of this word in a corresponding source code. By using a line number, a node in the syntax tree and a character string in the source code are associated with each other. Thus, by specifying a node on a syntax tree, the source code description corresponding to the node is specified. In addition, by rewriting a node on the syntax tree, the rewriting is reflected on the corresponding source code.

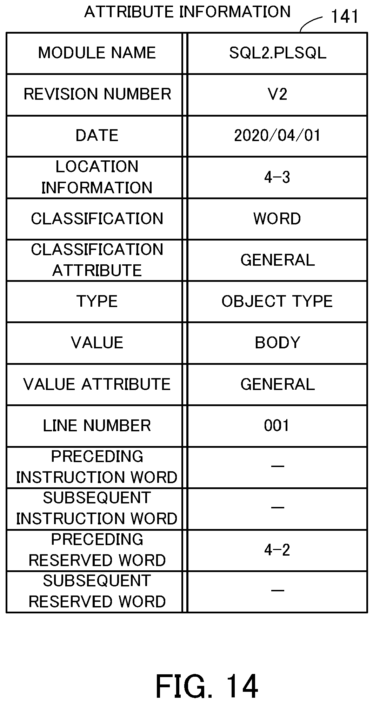

FIG. 14 illustrates an example of attribute information.

Attribute information 141 is associated with one node in the syntax tree. The attribute information 141 includes a module name, a revision number, a date, location information, a classification, a classification attribute, a type, a value, a value attribute, a line number, a preceding instruction word, a subsequent instruction word, a preceding reserved word, and a subsequent reserved word. However, depending on the type of the node, no item values may be defined for some items.

The module name is a name for identifying the module. The module name may be the file name of the file including the corresponding source code. The revision number represents the version number of the source code. The date is a date on which the syntax tree is generated. The syntax tree of the source code may be stored after the syntax tree is generated. The location information represents the location of the node in the syntax tree. As will be described below, the location of the node may be represented by two-dimensional coordinates including a vertical location and a horizontal location.

The classification represents the highest classification of the node, such as "system", "module", "block", "section", "statement", "clause", "phrase", or "word". The classification attribute represents either "general node" or "complementary node". The general node corresponds to a language element directly extracted from the source code. The complementary node corresponds to a language element that is not explicitly written in the source code and that is added for interpretation. The type is a group obtained by further dividing the classification described above, such as "general phrase" or "instruction word". The value is a character string. The value attribute is the type of the above value. Examples of the value attribute include "general character string", "TBD", "EST", and "complementary character string". The complementary character string is DECLARE, END, or a terminal symbol.

The line number is the number of the line in which the language element corresponding to the node appears in the source code. If the language element extends over two or more lines, the number of the starting line is used as the line number. If the node corresponds to one of the instruction words in a compound instruction, the preceding instruction word represents location information about the instruction word immediately before the node. If the node corresponds to one of the instruction words in a compound instruction, the subsequent instruction word represents location information about the instruction word immediately after the node. If the node corresponds to one of the reserved words in a consecutively reserved word, the preceding reserved word represents location information about the reserved word immediately before the node. If node corresponds to one of the reserved words in a consecutively reserved word, the subsequent reserved word represents location information about the reserved word immediately before the node.

The syntax tree may be represented as a syntax table in a two-dimensional table format. In this way, the syntax analysis unit 123 is able to easily store the syntax tree in a nonvolatile storage and to expand the syntax tree in a main memory later. Each node in the syntax tree is placed in the syntax table in accordance with the following rules.

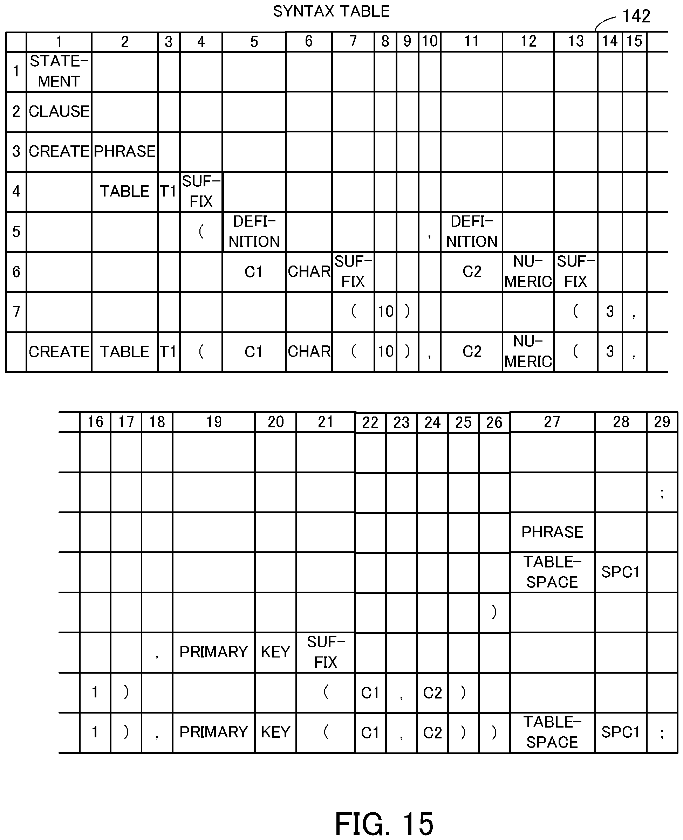

FIG. 15 illustrates an example of the syntax table.

Hereinafter, a case in which nodes under a statement node corresponding to one statement are placed in a syntax table will be described. A syntax table 142 is a syntax table generated from the syntax tree 152 in FIG. 6. The coordinates of the location of the upper left cell in the syntax table 142 are (1, 1). A cell located at a lower location has a larger row number, which represents the vertical location of the cell. A cell located further in a right direction has a larger column number, which represents the horizontal location of the cell. The coordinates of the location of an individual cell are defined as (the row number, the column number).

The node representing the statement is placed in the upper left cell in the syntax table 142. A leftmost child node among the child nodes immediately below a certain node is placed in a cell that is one level lower than a cell corresponding to the certain node. This cell that is one level lower has a row number larger by one than that of the certain node and has the same column number as that of the certain node. A node that has the same parent node as that of another node and that is located on the right side of the other node is placed in a cell on the right side of a cell corresponding to the other node. The cell on the right side has the same row number as that of the other cell and has a larger column number than that of the other cell. The cells in which the nodes are placed are determined in order of depth.

One word node included in the syntax tree is placed in one column. Thus, while two nodes having a parent-child relationship have consecutive row numbers, two nodes having the same parent node may have inconsecutive column numbers. As a result, the 29 words included in the SQL statement are placed in the first to twenty-ninth columns of the syntax table 142 with the order maintained. The syntax table 142 and the syntax tree 152 are mutually convertible.

The syntax analysis unit 123 knows keywords for decomposing an SQL statement and an SQL procedure code in advance. The information processing apparatus 100 holds a list of keywords.

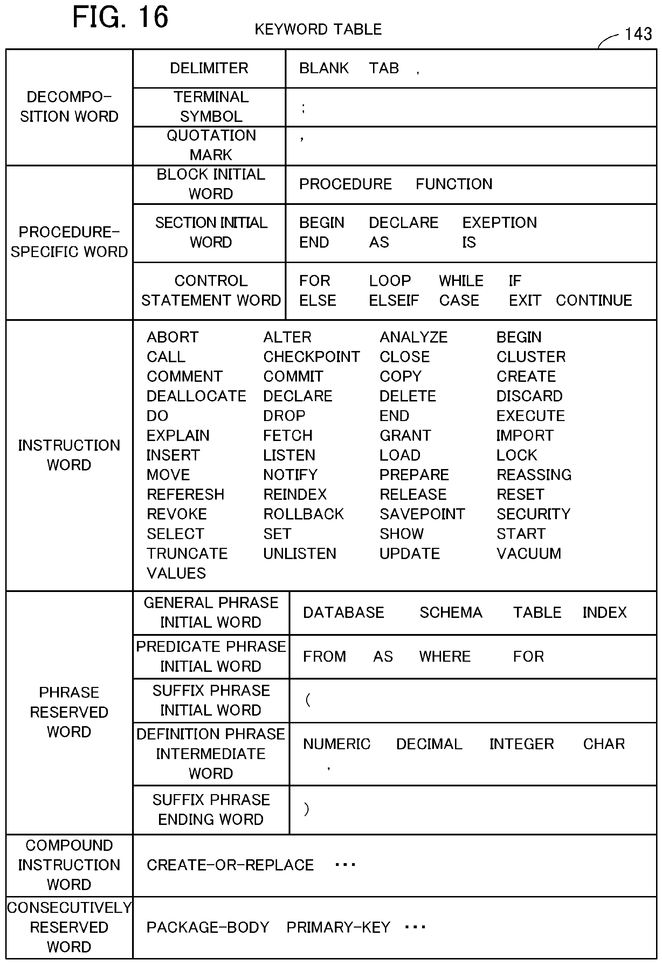

FIG. 16 illustrates an example of a keyword table.

A keyword table 143 indicates keywords that may be used in an SQL statement and an SQL procedure code and also indicates classifications and types of the keywords. The keyword table 143 may be incorporated in the syntax analysis unit 123 or may be stored in the incompatibility information storage unit 122.

The keywords are classified into decomposition words, procedure-specific words, instruction words, phrase reserved words, compound instruction words, and consecutively reserved words, and these classified keywords are stored in the keyword table 143. The decomposition words are further classified into delimiters, a terminal symbol, and a quotation mark. The procedure-specific words are further classified into block initial words, section initial words, and control statement words. The phrase reserved words are further classified into general phrase initial words, predicate phrase initial words, a suffix phrase initial word, definition phrase intermediate words, and a suffix phrase ending word.

The individual delimiter is a symbol representing a break between words, and examples of the delimiter includes a blank, a tab, and a comma. The terminal symbol is a symbol representing the end of a statement and is, for example, a semicolon. The quotation mark is a symbol representing the range of a user-defined word and is, for example, a single quotation. The individual block initial word is a keyword used at the head of a block, and examples of the block initial word includes PROCEDURE and FUNCTION. The individual section head word is a keyword used at the head of a section. The control statement word is a keyword used in a control statement that defines a control structure such as a conditional branch and a loop.

The individual instruction word is a keyword representing an instruction and is used at the head of a clause. The individual general phrase initial word is a keyword used at the head of a general phrase, and examples of the general phrase initial word includes TABLE and INDEX. The individual predicate phrase initial word is a keyword used at the head of a predicate phrase, and examples of the predicate phrase initial word includes FROM and AS. The suffix phrase initial word is a keyword used at the head of a suffix phrase and is, for example, an opening parenthesis. The individual definition phrase intermediate word is a keyword used in a definition phrase, and examples of the definition phrase intermediate word includes NUMERIC, CHAR, and a comma. The suffix phrase ending word is a keyword used at the end of a suffix phrase and is, for example, a closing parenthesis. The individual compound instruction word is a sequence of two or more instruction words. The consecutively reserved word is a sequence of two or more object types.

The syntax analysis unit 123 handles an SQL statement and an SQL procedure code in a unified manner. Thus, when an SQL procedure code is inputted, the syntax analysis unit 123 first divides the SQL procedure code into one or more statements. If there is no instruction word at the head of a statement, the syntax analysis unit 123 adds an instruction word at the head of the statement. In this way, the syntax analysis unit 123 generates a statement-level syntax tree having leaf nodes corresponding to the statement. When an SQL statement is inputted, since one SQL statement is one statement, the syntax analysis unit 123 generates a statement-level syntax tree having leaf nodes corresponding to the one SQL statement.

In this way, the syntax analysis unit 123 generates a statement-level syntax tree having a common format between the SQL statement and the SQL procedure code. Next, the syntax analysis unit 123 decomposes each of the statements included in the statement-level syntax tree and expands each statement node into word nodes. In this way, a word-level syntax tree is generated by using a unified algorithm and format.

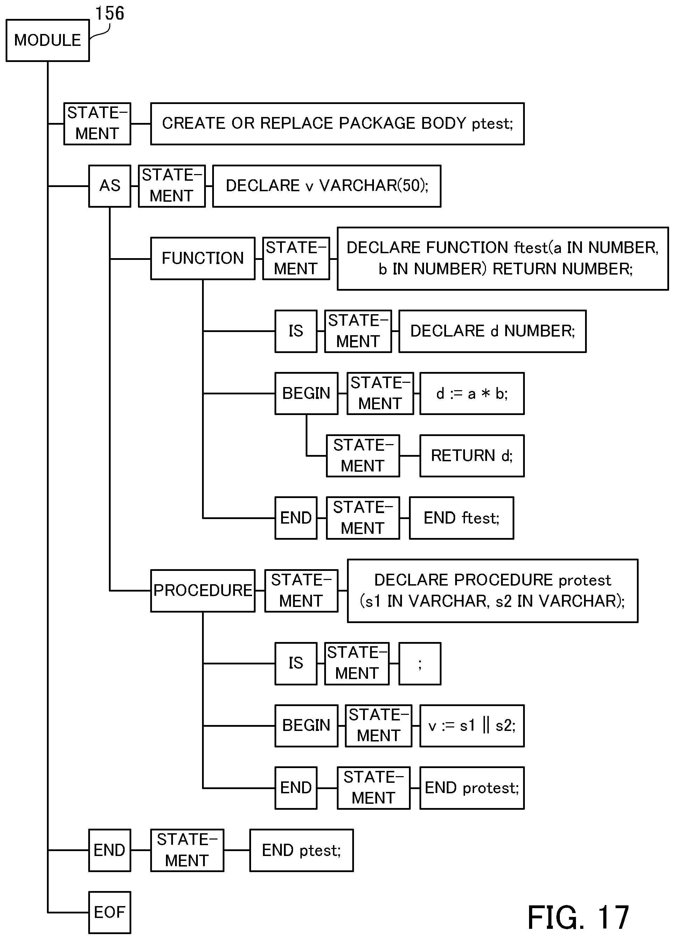

FIG. 17 illustrates an example of a statement-level syntax tree.

A syntax tree 156 is a statement-level intermediate syntax tree generated from the source code 135 in FIG. 8. The syntax tree 156 includes nodes representing a module, blocks, sections, and statements. In addition, the syntax tree 156 includes character string nodes, each of which represents a character string of a statement under the node representing the statement. The syntax tree 156 includes 12 statement nodes. The syntax analysis unit 123 decomposes each of the 12 statements and generates a partial tree representing the syntax of an individual statement. In this way, the syntax tree 156 is expanded to the syntax tree 154.

Next, incompatibility information will be described. As described above, incompatibility occurs depending on a pair of a migration-source database product and a migration-destination database product. The migration-source database product may be referred to as an incompatibility absorption source or simply as an absorption source. The migration-destination database product may be referred to as an incompatibility absorption destination or simply as an absorption destination. Incompatibility absorption between various database products is indicated by a network-type data structure such as a directed graph.

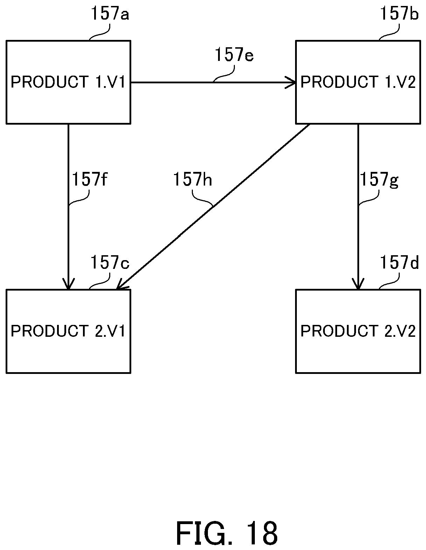

FIG. 18 is a graph illustrating an example of a relationship among database products.

The graph includes a plurality of nodes and a plurality of edges. One node represents one database product. Database products of different software vendors or different versions are handled as different database products. The individual database product is identified by, for example, a product name and a version number. One edge represents a pair of an incompatibility-absorption-source database product and an incompatibility-absorption-destination database product. The individual edge has a direction. The individual node has a property that represents extended information about provision of the corresponding database product. The property includes, for example, a shipping start date, a shipping stop date, and a support stop date.

As an example, the graph includes nodes 157a, 157b, 157c, and 157d and edges 157e, 157f, 157g, and 157h. The node 157a represents version V1 of product 1. The node 157b represents version V2 of product 1. The node 157c represents version V1 of product 2. The node 157d represents version V2 of product 2.

The edge 157e is an edge from the node 157a to the node 157b and represents incompatibility absorption from version V1 of product 1 to version V2 of product 1. The edge 157f is an edge from the node 157a to the node 157c and represents incompatibility absorption from version V1 of product 1 to version V1 of product 2. The edge 157g is an edge from the node 157b to the node 157d and represents incompatibility absorption from version V2 of product 1 to version V2 of product 2. The edge 157h is an edge from the node 157b to the node 157c and represents incompatibility absorption from version V2 of product 1 to version V1 of product 2.

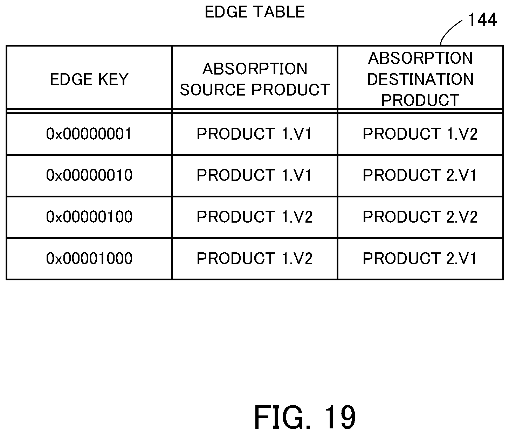

FIG. 19 illustrates an example of an edge table.

An edge table 144 manages the above-described edges. The edge table 144 is stored in the incompatibility information storage unit 122. One record in the edge table 144 corresponds to one edge. Each record includes information about an edge key, an absorption source product, and an absorption destination product.

The individual edge key is a bit string for identifying an edge. Different edge keys are assigned to different edges. One of the plurality of bits included in the individual edge key is 1, and the values of the other bits are 0. Thus, an edge is identified by the location of a bit having a value of 1. These edge keys may be referred to as a bitmap. An absorption source product is a database product represented by a source side node from which an edge emerges. An absorption destination product is a database product represented by a target side node into which an edge enters.

One item of incompatibility information is knowledge information representing the characteristics of one incompatible portion that appears on the syntax tree and representing a method for correcting the incompatible portion. As many as several thousands of items of incompatibility information may be valid for one pair of an incompatibility absorption source and an incompatibility absorption destination. The same incompatibility information may be commonly valid for a different pair of an absorption source and an absorption destination. The number of database products that have been distributed in the past monotonically increases as new products are shipped and version upgrades are made. Consequently, the number of items of incompatibility information and the number of pairs of absorption sources and absorption destinations gradually increase. Thus, the incompatibility detection unit 124 is configured to search for the incompatibility information relating to the target incompatibility absorption at high speed.

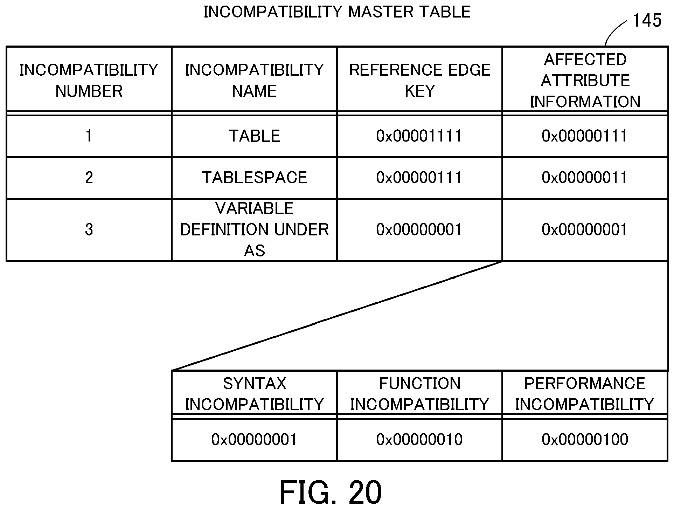

FIG. 20 illustrates an example of an incompatibility master table.

An incompatibility master table 145 is used for managing the incompatibility information. The incompatibility master table 145 is stored in the incompatibility information storage unit 122. One record in the incompatibility master table 145 corresponds to one item of incompatibility information. Each record includes information about an incompatibility number, an incompatibility name, a reference edge key, and affected attribute information.

The individual incompatibility number is an identification number for identifying incompatibility information. The individual incompatibility name is a character string that concisely expresses the characteristics of an incompatible portion detected and corrected by the corresponding incompatibility information. The incompatibility name may be determined by a user who creates the corresponding incompatibility information. Alternatively, the incompatibility name may be determined in accordance with a criterion, which will be described below. The individual reference edge key is a bit string representing an edge for which the corresponding incompatibility information is valid. The individual reference edge key is a logical sum of edge keys assigned to at least one edge for which the corresponding incompatibility information is valid. One edge key includes only one bit having a value of 1, and a different edge key has a bit having a value of 1 at a different location. Thus, when incompatibility information relates to n edges, the reference edge key includes n bits having a value of 1.

When searching for incompatibility information that is valid for a pair of an absorption source and an absorption destination, that is, for a certain edge, the incompatibility detection unit 124 calculates a logical product of the edge key of the certain edge and the reference edge key of the individual incompatibility information. If the obtained logical product is 0, this incompatibility information is not valid for the edge. If the obtained logical product is not 0, this incompatibility information is valid for the edge. In this way, the incompatibility detection unit 124 searches for the related incompatibility information at high speed.

The individual affected attribute information is a bit string representing the type of incompatibility. The incompatibility is classified into syntax incompatibility, function incompatibility, and performance incompatibility. The syntax incompatibility indicates that an instruction format supported by the absorption source product is not supported by the absorption destination product. The syntax incompatibility occurs due to a difference between the APIs of the absorption source product and the absorption destination product. The function incompatibility indicates that, although the absorption source product and the absorption destination product support the same instruction format, different functions are performed by the instruction. The performance incompatibility indicates that, although both the absorption source product and the absorption destination product perform the same function based on the same instruction, their respective performances such as response speeds are greatly different from each other.

One bit is assigned to each of the syntax incompatibility, the function incompatibility, and the performance incompatibility. When the affected attribute information corresponds to a certain item of incompatibility information, a certain one of the corresponding bit values indicates 1, depending on the type of incompatibility occurring at the incompatible portion. One incompatible portion may cause two or more types of incompatibility. Thus, in the above example, the minimum value of the number of bits having a value of 1 is 1, and the maximum value thereof is 3. Information about the type of incompatibility is useful for the operation of incompatibility absorption. Thus, the incompatibility detection unit 124 may output information about the type of incompatibility corresponding to the detected incompatible portion. In addition, the code conversion unit 125 may output information about the type of incompatibility corresponding to the corrected incompatible portion.

Next, an individual item of incompatibility information will be described.

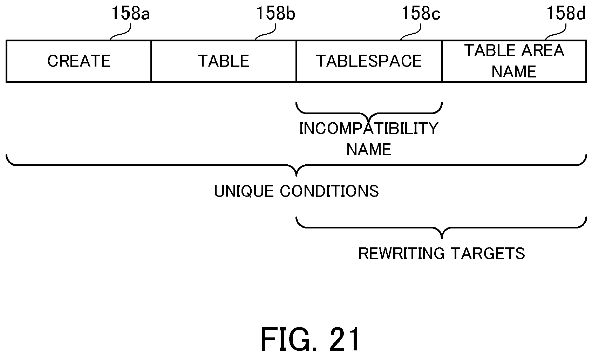

FIG. 21 illustrates an example of an incompatibility name, unique conditions, and rewriting targets.

Characteristics of an incompatible portion are defined in view of the context in the incompatibility information such that the syntax tree is searched for the incompatible portion. Normally, the incompatibility detection unit 124 first searches for the most characteristic keyword among the keywords included in the incompatible portion. This keyword may be referred to as an anchor, and searching the syntax tree for the anchor may be referred to as an anchor search. It is preferable that the incompatibility name of the incompatibility information be determined to include the name of the anchor.

The incompatibility detection unit 124 searches the periphery of the anchor in the syntax tree for a peripheral node having attribute information that satisfies certain conditions. As a result, a node group forming an incompatible portion is specified. Characteristics of a node group including an anchor may be referred to as unique conditions. When an incompatible portion is specified in the syntax tree, the code conversion unit 125 specifies a node to be corrected by using the node of the incompatible portion as a starting point. The starting point may be the anchor. The node to be corrected may be included in the incompatible portion or may be outside the incompatible portion. Next, the code conversion unit 125 rewrites the syntax tree such that the incompatibility is eliminated.

As one example, an SQL statement CREATE TABLE T1(C1 CHAR(10), C2 NUMERIC(3,1), PRIMARY KEY(C1,C2)) TABLESPACE SPC1; illustrated in FIG. 6 will be considered. In this example, the incompatibility absorption destination does not permit the use of a TABLESPACE phrase in a CREATE TABLE clause. This example assumes that the incompatibility is eliminated by deleting the TABLESPACE phrase.

In this incompatibility, words 158a, 158b, 158c, and 158d form the incompatible portion. The word 158a is CREATE, the word 158b is TABLE, the word 158c is TABLESPACE, and the word 158d is a user-defined table area name. The most characteristic keyword included in this incompatible portion is TABLESPACE of the word 158c. Thus, the word 158c is the anchor and is used as an incompatibility name. Further, the words 158a, 158b, 158c, and 158d form unique conditions, and the words 158c and 158d form rewriting targets.

As described above, in the syntax tree 152 in FIG. 6, first, the incompatibility detection unit 124 detects the node 152c having a value of TABLESPACE and specifies a phrase starting with TABLESPACE. Next, the incompatibility detection unit 124 specifies a clause including the phrase and detects the node 152a, which is an instruction word at the head of the clause and has CREATE as a value. Finally, the incompatibility detection unit 124 specifies the phrase immediately to the right of the instruction word and detects the node 152b, which is an object type at the head of the phrase and has TABLE as a value. By detecting a node group that satisfies all of the above conditions, the incompatibility detection unit 124 determines that the syntax tree 152 includes an incompatible portion relating to TABLESPACE.

The code conversion unit 125 eliminates the incompatibility by deleting the phrase node immediately above the node 152c and all the nodes under the phrase node from the syntax tree 152. The code conversion unit 125 converts the rewritten syntax tree 152 into a source code.

In this way, the search for an incompatible portion is performed. However, because the syntax tree may have a nested structure such as a sub-query, the search may become complicated and may involve a large amount of calculation. In addition, creating the incompatibility information may become highly difficult and may take a long time. Thus, the incompatibility detection unit 124 limits the search range from the anchor. Specifically, when a child node of a certain node has a classification level grammatically equal to or higher than that of the certain node (for example, a phrase or a clause with respect to a phrase), this child node is excluded from the search range. In addition, when a parent node of a certain node has a classification level (for example, a clause or a phrase with respect to a clause) grammatically equal to or lower than that of the certain node, this parent node is excluded from the search range.

Therefore, even when the incompatibility information instructs a search in the upper direction, the incompatibility detection unit 124 stops the search in the upper direction when the classification of the parent node is equal to or lower than the classification of the current node. In addition, even when the incompatibility information instructs a search in the lower direction, the incompatibility detection unit 124 stops the search in the lower direction when the classification of the child node is equal to or higher than the classification of the current node.

Furthermore, even when the incompatibility information instructs a search in the right direction, the incompatibility detection unit 124 stops the search in the right direction when a known keyword exceeding the instruction range to which the current node belongs is detected. Similarly, even when the incompatibility information instructs a search in the left direction, the incompatibility detection unit 124 stops the search in the left direction when a known keyword exceeding the instruction range to which the current node belongs is detected.

Next, specifying instructions and rewriting instructions included in the incompatibility information will be described. The incompatibility information includes a sequence of specifying instructions that defines a procedure for detecting an incompatible portion in the syntax tree. The specifying instructions are sequentially executed from the top specifying instruction. If the specifying instructions are normally executed till the last specifying instruction, the incompatibility detection unit 124 determines that an incompatible portion has been detected. If execution of any of the specifying instructions fails due to the absence of the node that satisfies the conditions, the incompatibility detection unit 124 determines that no incompatible portion has been detected. The incompatibility information also includes a sequence of rewriting instructions that defines a procedure for rewriting the syntax tree. The rewriting instructions are also executed sequentially from the top rewriting instruction.

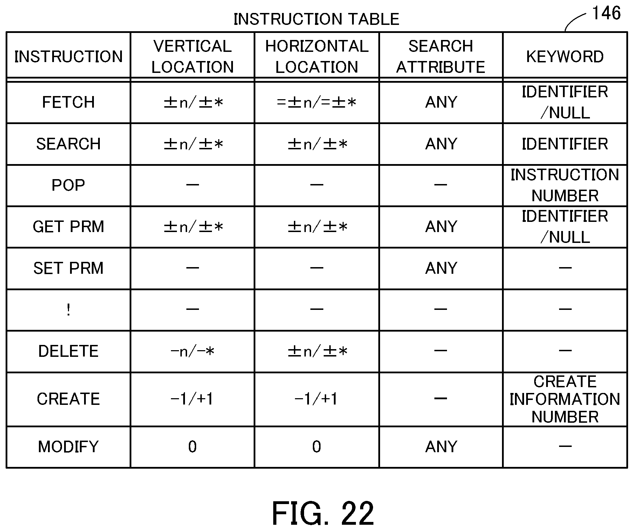

FIG. 22 illustrates an example of an instruction table.

An instruction table 146 represents the definitions of instructions that may be used in the incompatibility information. The instruction table 146 may be stored in the incompatibility information storage unit 122. One record in the instruction table 146 corresponds to one instruction. One record in the instruction table 146 includes information about an instruction, a vertical location, a horizontal location, a search attribute, and a keyword.

The vertical location, the horizontal location, the search attribute, and the keyword are arguments of the instruction. The vertical location is a condition about the vertical location relationship between a current node of interest and a target node. + represents the upward direction, - represents the downward direction, n represents the distance from the current node, and * represents no distance limit. The horizontal location is a condition about the horizontal location relationship between the current node of interest and the target node. = represents the same horizontal location as the current node, + represents the right direction, - represents the left direction, n represents the distance from the current node, and * represents no distance limit.

The horizontal location may be specified by using a format [instruction number]. This indicates that the search is performed from, as a starting point, the horizontal location of the node selected by an instruction having an instruction number. In this case, the starting point is not included in the search target. The horizontal location may also be specified by using a format [instruction number 1: instruction number 2]. This indicates that the search is performed between the horizontal location of the node selected by an instruction having instruction number 1 and the horizontal location of the node selected by an instruction having instruction number 2. In this case, both ends of the section are not included in the search target. The search attribute indicates conditions about the classification, the classification attribute, the type, and the value attribute of the target node.

The keyword is information for specifying a node, other than the search attribute. The keyword may be an identifier as a word value. As the keyword, an instruction number of an executed instruction may be specified. This indicates that the node specified by this instruction is to be re-selected. In addition, as will be described below, an action, which is performed when the result obtained by executing an instruction is true, that is, when a node satisfying the conditions exists, may be defined in association with the instruction.

Absence of an action indicates that the process proceeds to the next instruction. RET indicates that the next instruction is executed, and when the result obtained by executing the next instruction is false, the process returns to the corresponding instruction. NEXT [instruction number] indicates that the process jumps to an instruction of a designated instruction number. In addition, another instruction itself using the attribute information about the current node may be defined as an action.

Examples of the instruction include FETCH, SEARCH, POP, GET PRM, SET PRM, !, DELETE, CREATE, and MODIFY. FETCH, SEARCH, POP, GET PRM, SET PRM, and ! may be used as the specifying instructions. DELETE, CREATE, and MODIFY may be used as the rewriting instructions.

FETCH is an instruction for searching for a node satisfying the conditions and for changing the current node to the detected node. SEARCH is an instruction for searching for a node satisfying the conditions. However, SEARCH does not change the current node. POP is an instruction for setting the node selected by the executed FETCH to the current node. GET PRM is an instruction for storing the attribute information about the node satisfying the conditions in a stack. SET PRM is an instruction for outputting attribute information stored in the stack. SET PRM may be used in the keyword of FETCH or SEARCH. ! is a negation instruction for inverting true and false. By adding ! before SEARCH, when no node satisfying the conditions is detected, the result obtained by executing the instruction is determined to be true.

DELETE is an instruction for deleting a node within the range specified by using the current node as a reference from the syntax tree. Note that execution of DELETE does not change a pointer pointing at the current node. CREATE is an instruction for inserting a partial tree before or after the current node. The partial tree to be inserted is stored as CREATE information separately from the instruction sequence. CREATE has, as an argument, a keyword including a CREATE information number for identifying CREATE information. MODIFY is an instruction for rewriting the attribute information about the current node in accordance with an action. In the action, a regular expression program is specified.

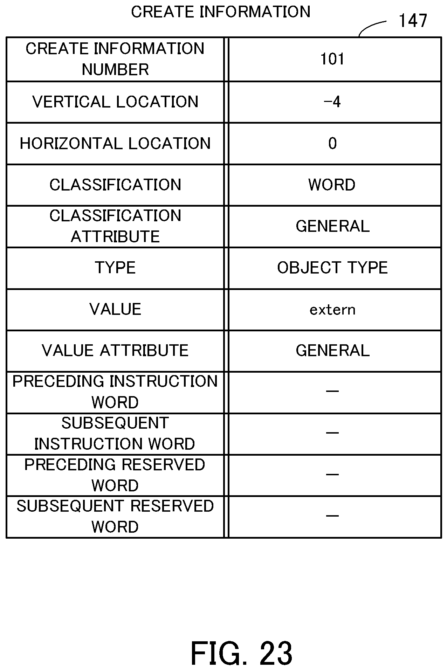

FIG. 23 illustrates an example of CREATE information.

CREATE information 147 is stored in the incompatibility information storage unit 122. The CREATE information 147 includes a CREATE information number, a vertical location, a horizontal location, a classification, a classification attribute, a type, a value, a value attribute, a preceding instruction word, a subsequent instruction word, a preceding reserved word, and a subsequent reserved word. The CREATE information number is an identification number for identifying the CREATE information 147. The vertical location, the horizontal location, the classification, the classification attribute, the type, the value, the value attribute, the preceding instruction word, the subsequent instruction word, the preceding reserved word, and the subsequent reserved word are set for each node included in a partial tree.

The vertical location and the horizontal location indicate the relative location of the node in the corresponding partial tree. The coordinates of the vertex of the partial tree are (0, 0). The vertical location is an integer of 0 or less, and the horizontal location is an integer of 0 or greater. The meanings of the classification, the classification attribute, the type, the value, the value attribute, the preceding instruction word, the subsequent instruction word, the preceding reserved word, and the subsequent reserved word are the same as those of the attribute information 141 in FIG. 14.

The incompatibility information is written by using the above instructions. Examples of the incompatibility information applied to the syntax tree 152 in FIG. 6 and the incompatibility information applied to the syntax tree 154 in FIGS. 9 and 10 will be described.

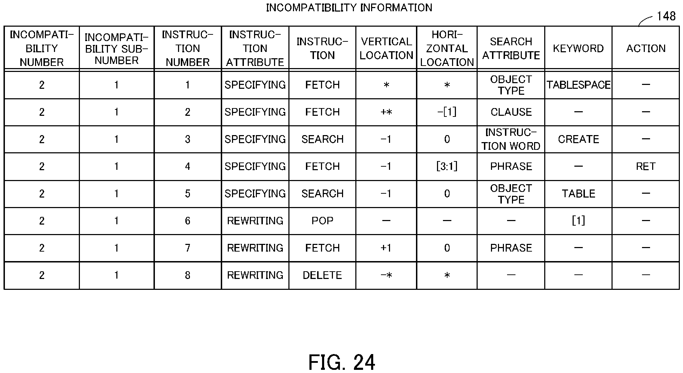

FIG. 24 illustrates a first example of the incompatibility information.

Incompatibility information 148 is an example of the incompatibility information applied to the syntax tree 152 in FIG. 6. The incompatibility information 148 is stored in the incompatibility information storage unit 122. One record in the incompatibility information 148 corresponds to one specifying instruction or one rewriting instruction. Each record in the incompatibility information 148 includes information about an incompatibility number, an incompatibility sub-number, an instruction number, an instruction attribute, an instruction, a vertical location, a horizontal location, a search attribute, a keyword, and an action.

The incompatibility number is an identification number for identifying an item of incompatibility information. When an item of incompatibility information includes two or more items of incompatibility sub-information, an incompatibility sub-number is an identification number for identifying an item of incompatibility sub-information. As will be described below, there is a case in which the nodes located away from each other in the syntax tree cause the same incompatibility. In this case, it may be preferable to define specifying instructions and rewriting instructions per area in the syntax tree. Thus, a group of specifying instructions and rewriting instructions for eliminating one incompatibility may be divided into two or more items of incompatibility sub-information.

The instruction number is a natural number. In the incompatibility information 148, the instruction numbers are given in the ascending order and indicate the execution order of the instructions. The instruction attribute indicates either "specifying instruction" or "rewriting instruction". The vertical location, the horizontal location, the search attribute, and the keyword are arguments of the corresponding instruction. The action indicates a process to be performed when the result of the instruction is true. The incompatibility information 148 includes eight instructions from the first instruction to the eighth instruction. The first instruction to the fifth instruction are specifying instructions, and the sixth instruction to the eighth instruction are rewriting instructions.

The first instruction searches the syntax tree for a node whose type is "object type" and whose value is "TABLESPACE" and selects the detected node as the current node. The second instruction searches for a node whose vertical location is higher than the current node, whose horizontal location is to the left of the current node, and whose classification is "clause", the node being the closest to the current node. The second instruction selects this node as the current node. The third instruction searches for a node which is immediately below the current node, whose type is "instruction word", and whose value is "CREATE". The fourth instruction searches for a node whose vertical location is one level lower than the current node, whose horizontal location is between CREATE and TABLESPACE, and whose classification is "phrase" and selects this node as the current node.

The fifth instruction searches for a node which is immediately below the current node, whose type is "object type", and whose value is "TABLE". If the result of the fifth instruction is false, the search returns to the fourth instruction. The sixth instruction sets the node of TABLESPACE selected by the first instruction to the current node. The seventh instruction searches for a node which is immediately above the current node and whose classification is "phrase" and selects this node as the current node. The eighth instruction deletes the current node and all the nodes under the current node.

If the specifying instructions have been sequentially executed from the first instruction to the fifth instruction, which is the last specifying instruction, it is determined that the syntax tree includes an incompatible portion. Next, by using the result of the specifying instructions, the rewriting instructions are executed. Alternatively, only the specifying instructions may be executed.

Next, an example of incompatibility information including two or more items of incompatibility sub-information will be described by using the syntax tree 154 in FIGS. 9 and 10. If an AS section includes two or more blocks and if a variable is declared outside these two or more blocks, this incompatibility-absorption-source database product recognizes the variable as a global variable (external variable) that is commonly usable by the two or more blocks. However, the corresponding incompatibility-absorption-destination database product recognizes a variable that is not explicitly declared as an external variable as a local variable (internal variable). Thus, incompatibility exists between the nodes 154b and 154c in the syntax tree 154. This incompatibility is eliminated by inserting a modifier extern before the node 154b and rewriting the variable name of the node 154c to extern.v.

However, the variable name of the node 154c is rewritten only when an internal variable having the same variable name is not defined in the PROCEDURE block. This is because, when an internal variable having the same variable name is defined in the PROCEDURE block, the variable of the node 154c does not refer to the external variable defined by the node 154b but refers to the internal variable. Although the specifying and rewriting of the node 154b and the specifying and rewriting of the node 154c are the procedures for eliminating the same incompatibility, the incompatibility is more efficiently managed by defining the incompatibility as different items of incompatibility sub-information. Accordingly, the instruction group is divided into two items of incompatibility sub-information.

For example, there is a case in which a portion #1 and a portion #2 are located away from each other in the syntax tree. In this case, incompatibility information for rewriting only the portion #1 to eliminate a certain incompatibility may be established, and incompatibility information for rewriting both the portions #1 and #2 to eliminate another incompatibility may be established independently of the above incompatibility information. Thus, by separately creating incompatibility sub-information for the portion #1 and incompatibility sub-information for the portion #2 and providing a degree of freedom in combining these two items of incompatibility sub-information, the creation and use of the incompatibility information is managed more efficiently.

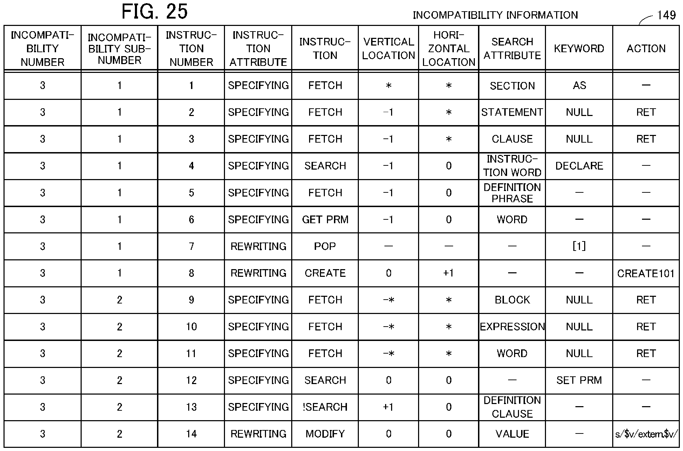

FIG. 25 illustrates a second example of the incompatibility information.

Incompatibility information 149 is an example of the incompatibility information applied to the syntax tree 154 in FIGS. 9 and 10. The incompatibility information 149 includes 14 instructions from the first instruction to the fourteenth instruction. The first instruction to the sixth instruction are specifying instructions of first incompatibility sub-information, and the seventh instruction and the eighth instruction are rewriting instructions of the first incompatibility sub-information. The ninth instruction to the thirteenth instruction are specifying instructions of second incompatibility sub-information, and the fourteenth instruction is the rewriting instruction of the second incompatibility sub-information.

The first instruction searches the syntax tree for a node whose classification is "section" and whose value is "AS" and selects this node as the current node. As a result, the node 154a is specified. The second instruction searches for a node whose vertical location is one level lower than the current node and whose classification is "statement" and selects this node as the current node. When there are a plurality of corresponding statement nodes, the third and fourth instructions are repeated. The third instruction searches for a node whose vertical location is one level lower than the current node and whose classification is "clause" and selects this node as the current node. When there are a plurality of corresponding clause nodes, the fourth instruction is repeated.

The fourth instruction searches for a node which is immediately below the current node, whose type is "instruction word", and whose value is "DECLARE". The fifth instruction searches for a node which is immediately below the current node and whose type is "definition phrase" and selects this node as the current node. The sixth instruction searches for a node which is immediately below the current node and whose type is "word" and stores the value of the word node. As a result, the node 154b is specified, and the variable name (v) included in the node 154b is stored. As will be described below, the stored variable name is taken over by the second incompatibility sub-information.

The seventh instruction sets the node selected by the first instruction to the current node. The eighth instruction inserts a partial tree specified by the CREATE information number to the left of the current node. The ninth instruction searches for a node whose vertical location is lower than the current node and whose classification is "block" and selects this node as the current node. When there are a plurality of corresponding nodes, the tenth to twelfth instructions are repeated. The tenth instruction searches for a node whose vertical location is lower than the current node and whose classification is "expression" and selects this node as the current node. When there are a plurality of corresponding expression nodes, the eleventh and twelfth instructions are repeated.

The eleventh instruction searches for a node whose vertical location is lower than the current node and whose classification is "word" and selects this node as the current node. When there are a plurality of corresponding word nodes, the twelfth instruction is repeated. The twelfth instruction determines whether the value of the current node matches the variable name stored by the sixth instruction. The thirteenth instruction checks that there is no node whose vertical location is one level higher the current node and whose type is "definition clause". The fourteenth instruction rewrites the value of the current node in accordance with the regular expression program specified by the action. Specifically, the variable name is rewritten to extern.variable name.

In the example in FIG. 25, the seventh instruction that sets the anchor (AS section) to the current node is defined as the initial rewriting instruction of the first incompatibility sub-information. Alternatively, the seventh instruction may be defined as the last specifying instruction of the first incompatibility sub-information.

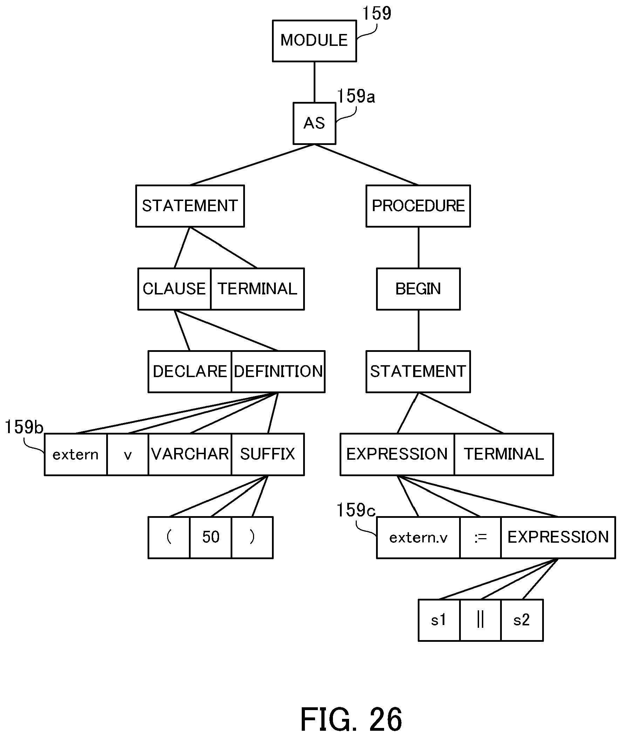

FIG. 26 illustrates an example of a rewriting result of a syntax tree. A syntax tree 159 is a syntax tree obtained by converting the syntax tree 154 by using the incompatibility information 149. However, FIG. 26 illustrates only the nodes related to the incompatibility among the nodes included in the syntax tree 159. The syntax tree 159 includes nodes 159a, 159b, and 159c. The node 159a is the same as the node 154a in the syntax tree 154 and represents an AS section. The node 159b represents a modifier extern added before a variable name. The node 159c corresponds to the node 154c and represents a corrected variable name.

As described above, the incompatibility information includes an instruction sequence representing a process procedure performed on the syntax tree. These instructions are a kind of meta-language and are interpretable as a functional language. Therefore, the incompatibility absorption rules commonly applied to various source codes such as SQL statements and SQL procedure codes are defined widely.

The calculation amount of the anchor search for detecting an anchor in a syntax tree increases in proportion to the size of the syntax tree. Therefore, the syntax analysis unit 123 may assign keyword search indexes to the syntax tree.

In this respect, in the anchor search, an instruction word at the head of a clause, a phrase reserved word adjacent to the instruction word, and a keyword representing a section have great importance. Therefore, the syntax analysis unit 123 defines a set of an instruction word of a clause and a reserved word of a phrase adjacent to the instruction word as an index key and also defines a keyword of a section as an index key. In addition, the syntax analysis unit 123 associates a module name, a starting line number, and an ending line number with an index key. In this way, the speed of the anchor search by the incompatibility detection unit 124 is increased.

Next, a process procedure performed by the information processing apparatus 100 will be described.

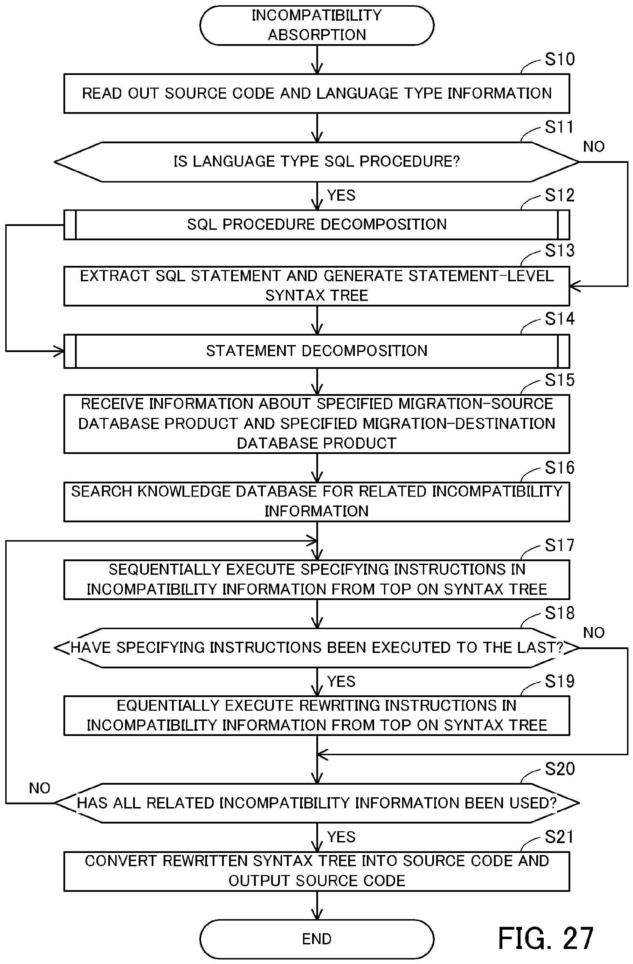

FIG. 27 is a flowchart illustrating a procedure example of the incompatibility absorption.

(S10) The syntax analysis unit 123 reads out a source code and language type information. The language type information is information for determining whether the language type is the SQL or the SQL procedure. The language type information is, for example, the extension of a file in which the source code is written.

(S11) The syntax analysis unit 123 determines whether the language type is the SQL procedure. If the language type is an SQL procedure, the process proceeds to step S12. If the language type is the SQL, the process proceeds to step S13.

(S12) The syntax analysis unit 123 executes SQL procedure decomposition to generate a statement-level syntax tree from SQL procedure codes. Next, the process proceeds to step S14. The SQL procedure decomposition will be described in detail below.

(S13) The syntax analysis unit 123 extracts an SQL statement from the source code and generates a statement-level syntax tree including one statement node representing the extracted SQL statement.

(S14) The syntax analysis unit 123 decomposes each statement included in the statement-level syntax tree to generate a word-level syntax tree. The statement decomposition will be described in detail below.

(S15) The incompatibility detection unit 124 receives information about a specified migration-source database product (incompatibility absorption source) and a specified migration-destination database product (incompatibility absorption destination). The incompatibility detection unit 124 may further receive information about whether to automatically rewrite the source code. For example, the user enters these items of information to the information processing apparatus 100.

(S16) The incompatibility detection unit 124 searches a knowledge database for all the incompatibility information relating to the target incompatibility absorption. For example, the incompatibility detection unit 124 reads out an edge key corresponding to the pair of the specified migration-source database product and migration-destination database product and reads out the incompatibility information having a reference edge key matching the edge key.

(S17) The incompatibility detection unit 124 selects one item of incompatibility information from the incompatibility information that has been read out in step S16. The incompatibility detection unit 124 sequentially executes the specifying instructions included in the selected item of incompatibility information from the top on the syntax tree generated in step S14.

(S18) The incompatibility detection unit 124 determines whether the specifying instructions included in the incompatibility information have been executed to the last specifying instruction. If the specifying instructions have been executed to the last specifying instruction, the process proceeds to step S19. If the specifying instructions have not been executed to the last specifying instruction, the process proceeds to step S20.

(S19) The code conversion unit 125 sequentially executes the rewriting instructions included in the incompatibility information from the top on the syntax tree. The incompatibility information may include two or more items of incompatibility sub-information. In this case, a plurality of sets of specifying instruction sequence and rewriting instruction sequence may be executed.

(S20) The incompatibility detection unit 124 determines whether all the items of incompatibility information relating to the target incompatibility absorption have been used. If all the items of incompatibility information have been used, the process proceeds to step S21. If there is still incompatibility information that has not been used, the process returns to step S17.

(S21) The code conversion unit 125 converts the rewritten syntax tree into a source code. The language (SQL or SQL procedure) for writing the source code is the same as that of the source code used before the conversion. The code conversion unit 125 outputs the converted source code. The code conversion unit 125 may display the converted source code on the display device 111, may store the converted source code in a nonvolatile storage, or may transmit the converted source code to another information processing apparatus.

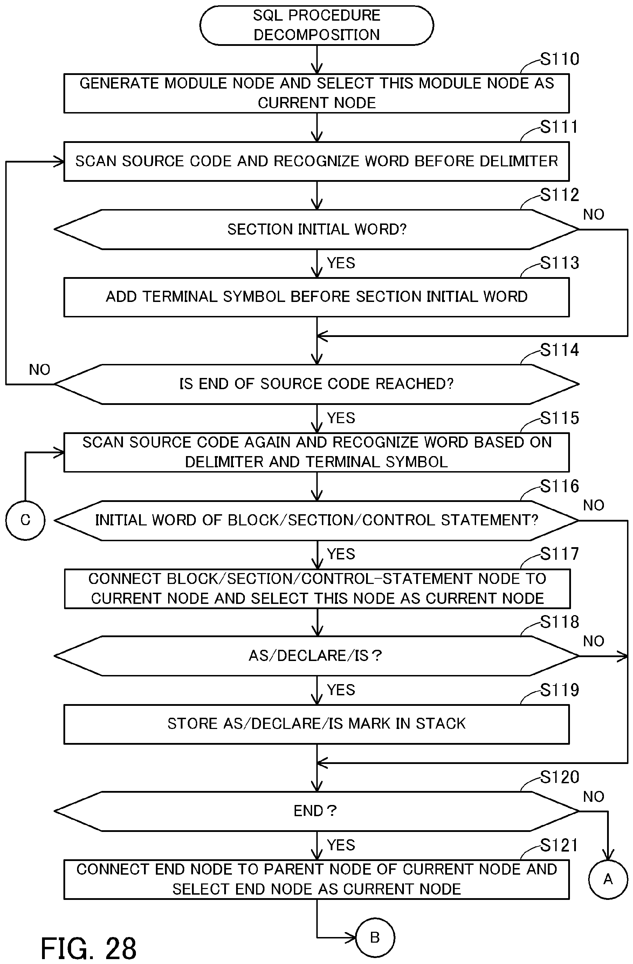

FIG. 28 is the first half of a flowchart illustrating a procedure example of the SQL procedure decomposition.

This SQL procedure decomposition is executed in step S12 described above.

(Slid) The syntax analysis unit 123 generates a module node as the root node of the syntax tree and selects the module node as the current node.

(5111) The syntax analysis unit 123 scans the character strings in the source code from the head toward the end to detect a delimiter and recognizes a word immediately before the delimiter.

(S112) The syntax analysis unit 123 determines whether this target word is a section initial word. If the target word is a section initial word, the process proceeds to step S113. If the target word is not a section initial word, the process proceeds to step S114.

(5113) The syntax analysis unit 123 adds a terminal symbol before the section initial word.

(S114) The syntax analysis unit 123 determines whether the end of the source code is reached. If the end of the source code is reached, the process proceeds to step S115. If the end of the source code is not reached, the process returns to step Sill.

(5115) The syntax analysis unit 123 scans the character strings in the source code again from the head toward the end and recognizes a word based on the delimiter and the terminal symbol.

(S116) The syntax analysis unit 123 determines whether the target word is a block initial word, a section initial word, or a control statement initial word. If the target word satisfies this condition, the process proceeds to step S117. If the target word does not satisfy this condition, the process proceeds to step S120.

(5117) The syntax analysis unit 123 generates a block node, a section node, or a control statement node in accordance with the attributes of the target word and connects the generated node under the current node. In addition, the syntax analysis unit 123 selects the generated node as the current node.

(5118) The syntax analysis unit 123 determines whether the target word is AS, DECLARE, or IS. If the target word satisfies this condition, the process proceeds to step S119. If the target word does not satisfy this condition, the process proceeds to step S120.

(S119) The syntax analysis unit 123 stores an AS mark, a DECLARE mark, or an IS mark based on the target word in a stack.

(S120) The syntax analysis unit 123 determines whether the target word is END. If the target word is END, the process proceeds to step S121. If the target word is not END, the process proceeds to step S122.

(S121) The syntax analysis unit 123 generates an END node and connects the END node under the parent node that is one level higher than the current node. In addition, the syntax analysis unit 123 selects the generated END node as the current node. Next, the process proceeds to step S132.

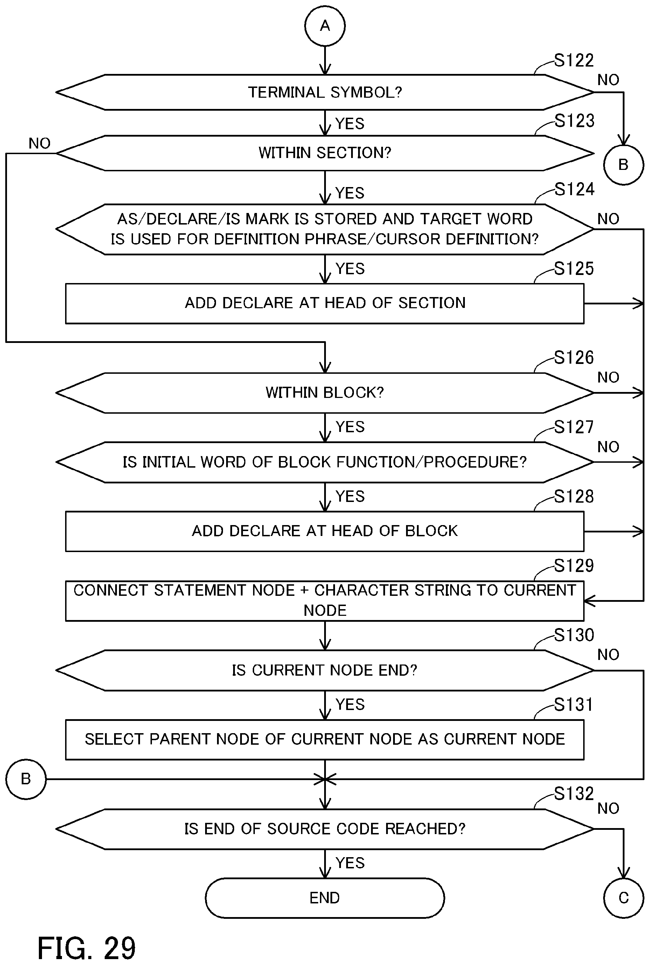

FIG. 29 is the second half of the flowchart illustrating the procedure example of the SQL procedure decomposition.

(S122) The syntax analysis unit 123 determines whether the target word is a terminal symbol. If the target word is a terminal symbol, the process proceeds to step S123. If the target word is not a terminal symbol, the process proceeds to step S132.

(S123) The syntax analysis unit 123 determines whether the target word is within a section. If the target word is with a section, the process proceeds to step S124. If the target word is outside a section, the process proceeds to step S126.

(S124) The syntax analysis unit 123 determines whether an AS mark, a DECLARE mark, or an IS mark is stored in a stack and whether the target word is a word used for a definition phrase or cursor definition. If these conditions are satisfied, the process proceeds to step S125. If the conditions are not satisfied, the process proceeds to step S129.

(S125) The syntax analysis unit 123 adds DECLARE at the head of the section in the source code. Next, the process proceeds to step S129.

(S126) The syntax analysis unit 123 determines whether the target word is with a block. If the target word is with a block, the process proceeds to step S127. If the target word is outside a block, the process proceeds to step S129.

(S127) The syntax analysis unit 123 determines whether the initial word of the block is FUNCTION or PROCEDURE. If the initial word of the block is FUNCTION or PROCEDURE, the process proceeds to step S128. Otherwise, the process proceeds to step S129.

(S128) The syntax analysis unit 123 adds DECLARE at the head of the block.

(S129) The syntax analysis unit 123 extracts a character string of the statement in which the target terminal symbol is placed at the end. The syntax analysis unit 123 generates a statement node representing the statement and connects the character string under the statement node. The syntax analysis unit 123 connects the statement node under the current node.

(S130) The syntax analysis unit 123 determines whether the current node is a node representing END. If the current node is a node representing END, the process proceeds to step S131. If the current node is not a node representing END, the process proceeds to step S132.

(S131) The syntax analysis unit 123 selects the parent node of the current node as the current node.

(S132) The syntax analysis unit 123 determines whether the end of the source code is reached. If the end of the source code is reached, the syntax analysis unit 123 ends the SQL procedure decomposition. If the end of the source code is not reached, the process returns to step S115.

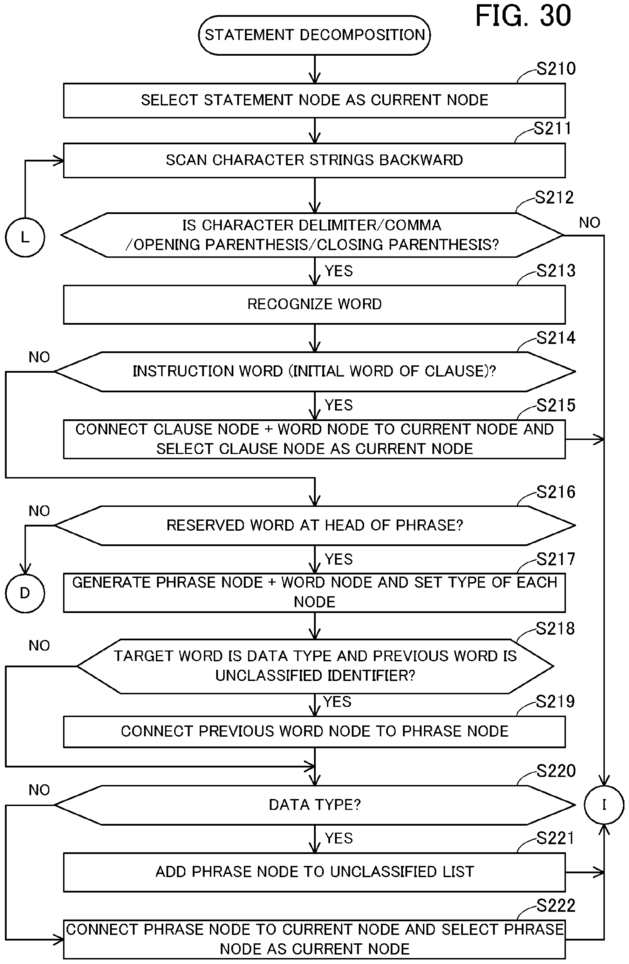

FIG. 30 is a first flowchart illustrating a procedure example of the statement decomposition.

This statement decomposition is executed in step S14 described above.

(S210) The syntax analysis unit 123 selects one statement node included in the statement-level syntax tree as the current node. The following process is performed on each statement node.

(S211) The syntax analysis unit 123 scans the character strings in the statement backward and extracts a character.

(S212) The syntax analysis unit 123 determines whether the extracted character is a delimiter, a comma, an opening parenthesis, or a closing parenthesis. If the extracted character is any one of the above characters, the process proceeds to step S213. If the extracted character is none of the above characters, the process proceeds to step S254.

(S213) The syntax analysis unit 123 recognizes a word from one or more characters between the end of the statement or the character extracted in the previous step S212 and the target character.

(S214) The syntax analysis unit 123 determines whether the target word is an instruction word serving as the initial word of a clause. If the target word is an instruction word, the process proceeds to step S215. If the target word is not an instruction word, the process proceeds to step S216.

(S215) The syntax analysis unit 123 generates a clause node representing the clause, generates a word node representing the target word, and connects the word node under the clause node. Regarding the clause node, the classification is "clause", the classification attribute is "none", the type is "none", the value is "none", and the value attribute is "none". Regarding the word node, the classification is "word", the classification attribute is "general", the type is "instruction word", the value is "recognized character string", and the value attribute is "general". The syntax analysis unit 123 connects the clause node under the current node and selects the clause node as the current node. Next, the process proceeds to step S254.

(S216) The syntax analysis unit 123 determines whether the target word is a reserved word used at the head of a phrase. If the target word is a reserved word at the head of a phrase, the process proceeds to step S217. If the target word is not a reserved word at the head of a phrase, the process proceeds to step S223.

(S217) The syntax analysis unit 123 generates a phrase node representing the phrase, generates a word node representing the target word, and connects the word node under the phrase node. Regarding the phrase node, the classification is "phrase", the classification attribute is "none", the value is "none", and the value attribute is "none". Regarding the word node, the classification is "word", the classification attribute is "general", the value is "recognized character string", and the value attribute is "general". If the target word is an object type, the type of the phrase node is set to "general phrase", and the type of the word node is set to "object type". If the target word is a preposition or an adverb, the type of the phrase node is set to "predicate phrase", and the type of the word node is set to "preposition/ adverb".

(S218) The syntax analysis unit 123 determines whether the target word is a data type and the previous word is an unclassified identifier. If the above conditions are satisfied, the syntax analysis unit 123 determines that the target word and the previous word form a definition phrase, and the process proceeds to step S219. If the above conditions are not satisfied, the process proceeds to step S220.

(S219) The syntax analysis unit 123 connects the word node corresponding to the previous word under the phrase node. The type of the phrase node is set to "definition phrase", and the type of the target word node is set to "data type".

(S220) The syntax analysis unit 123 determines whether the target word is a data type. If the target word is a data type, the process proceeds to step S221. If the target word is not a data type, the process proceeds to step S222.

(S221) The syntax analysis unit 123 adds the phrase node to an unclassified list. Next, the process proceeds to step S254.

(S222) The syntax analysis unit 123 connects the phrase node under the current node and selects the phrase node as the current node. Next, the process proceeds to step S254.

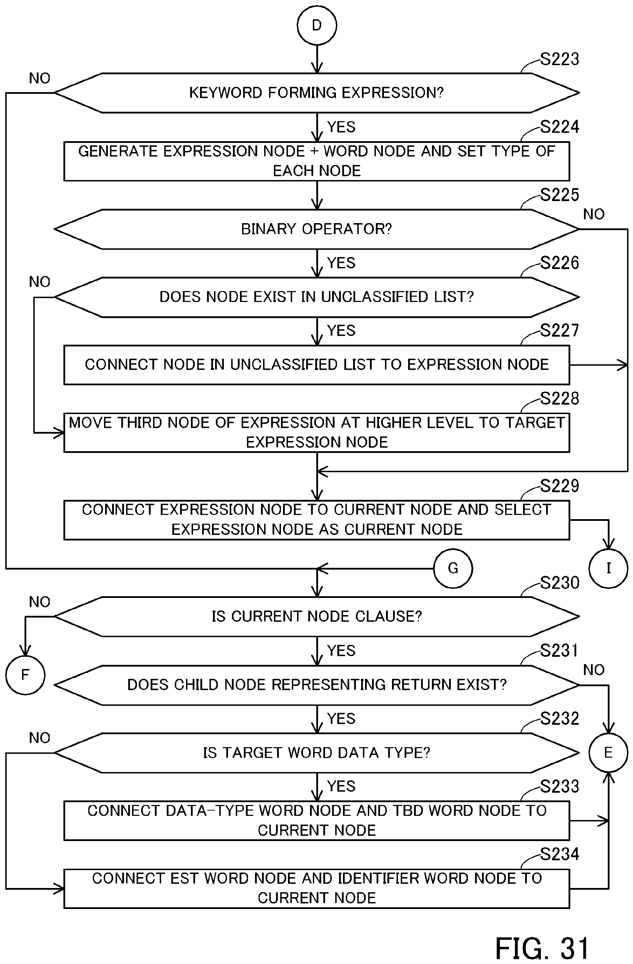

FIG. 31 is a second flowchart illustrating the procedure example of the statement decomposition.

(S223) The syntax analysis unit 123 determines whether the target word is a keyword forming an expression. If the target word is a keyword forming an expression, the process proceeds to step S224. If the target word is not a keyword forming an expression, the process proceeds to step S230.

(S224) The syntax analysis unit 123 generates an expression node representing the expression, generates a word node representing the target word, and connects the word node under the expression node. Regarding the expression node, the classification is "expression", the classification attribute is "none", the value is "none", and the value attribute is "none". Regarding the word node, the classification is "word", the classification attribute is "general", the value is "recognized character string", and the value attribute is "general". If the target word is a function name, the type of the expression node is set to "function", and the type of the word node is set to "function name".

(S225) The syntax analysis unit 123 determines whether the target word is a binary operator. If the target word is a binary operator, the syntax analysis unit 123 sets the type of the expression node to "arithmetic expression" and sets the type of the word node to "operator". Next, the process proceeds to step S226. If the target word is not a binary operator, the process proceeds to step S229.

(S226) The syntax analysis unit 123 determines whether a node exists in the unclassified list. If a node exists in the unclassified list, the process proceeds to step S227. If no node exists in the unclassified list, the process proceeds to step S228.

(S227) The syntax analysis unit 123 extracts a node from the unclassified list and connects the extracted node to the left end (head) under the expression node. Next, the process proceeds to step S229.

(S228) The syntax analysis unit 123 moves a third node, which is located under the parent node one level higher than the current node, to the left end (head) under the target expression node.

(S229) The syntax analysis unit 123 connects the expression node under the current node and selects the expression node as the current node. Next, the process proceeds to step S254.

(S230) The syntax analysis unit 123 determines whether the current node is a node representing a clause. If the current node is a node representing a clause, the process proceeds to step S231. If the current node is not a node representing a clause, the process proceeds to step S239.

(S231) The syntax analysis unit 123 determines whether a child node representing an instruction word RETURN exists under the current node. If a child node representing RETURN exists, the process proceeds to step S232. If no child node representing RETURN exists, the process proceeds to step S235.

(S232) The syntax analysis unit 123 determines whether the target word is a data type. If the target word is a data type, the process proceeds to step S233. If the target word is not a data type, the syntax analysis unit 123 determines that the target word is an identifier, and the process proceeds to step S234.

(S233) The syntax analysis unit 123 generates a data-type word node and a TBD word node and connects these two word nodes under the current node. Regarding the former word node, the classification is "word", the classification attribute is "general", the type is "data type", the value is "recognized character string", and the value attribute is "general". Regarding the latter word node, the classification is "word", the classification attribute is "general", the type is "word", the value is "TBD", and the value attribute is "TBD". Next, the process proceeds to step S235.

(S234) The syntax analysis unit 123 generates an EST word node and an identifier word node and connects these word nodes under the current node. Regarding the former word node, the classification is "word", the classification attribute is "general", the type is "word", the value is "EST", and the value attribute is "EST". Regarding the latter word node, the classification is "word", the classification attribute is "general", the type is "identifier", the value is "recognized character string", and the value attribute is "general".

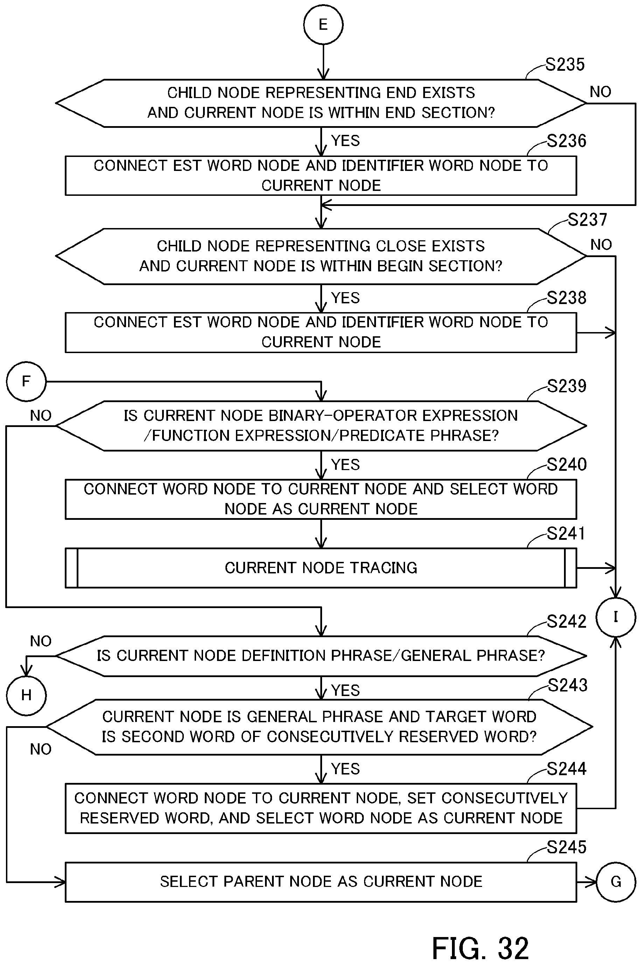

FIG. 32 is a third flowchart illustrating the procedure example of the statement decomposition.

(S235) The syntax analysis unit 123 determines whether a child node representing an instruction word END exists under the current node and the current node is within an END section (whether the current node is under a node representing an END section). If the above conditions are satisfied, the process proceeds to step S236. If the above conditions are not satisfied, the process proceeds to step S237.

(S236) The syntax analysis unit 123 generates an EST word node and an identifier word node and connects these two word nodes under the current node. Regarding the former word node, the classification is "word", the classification attribute is "general", the type is "word", the value is "EST", and the value attribute is "EST". Regarding the latter word node, the classification is "word", the classification attribute is "general", the type is "identifier", the value is "recognized character string", and the value attribute is "general".

(S237) The syntax analysis unit 123 determines whether a child node representing an instruction word CLOSE exists under the current node and whether the current node is within a BEGIN section (whether the current node is under a node representing a BEGIN section). If the above conditions are satisfied, the process proceeds to step S238. If the above conditions are not satisfied, the process proceeds to step S254.

(S238) The syntax analysis unit 123 generates an EST word node and an identifier word node and connects these two word nodes under the current node. Regarding the former word node, the classification is "word", the classification attribute is "general", the type is "word", the value is "EST", and the value attribute is "EST". Regarding the latter word node, the classification is "word", the classification attribute is "general", the type is "identifier", the value is "recognized character string", and the value attribute is "general". Next, the process proceeds to step S254.

(S239) The syntax analysis unit 123 determines whether the current node is a node representing an expression including a binary operator, a function expression, or a predicate phrase. If the current node is one of the above nodes, the process proceeds to step S240. If the current node is none of the above nodes, the process proceeds to step S242.

(S240) The syntax analysis unit 123 generates a word node representing the target word, connects the word node under the current node, and selects the word node as the current node. Regarding the word node, the classification is "word", the classification attribute is "general", the type is "identifier", the value is "recognized character string", and the value attribute is "general".

(S241) The syntax analysis unit 123 executes current node tracing. The current node tracing will be described below. Next, the process proceeds to step S254.

(S242) The syntax analysis unit 123 determines whether the current node is a node representing a definition phrase or a general phrase. If the current node is any one of the above nodes, the process proceeds to step S243. If the current node is none of the above nodes, the process proceeds to step S246.

(S243) The syntax analysis unit 123 determines whether the current node is a node representing a general phrase, whether a child node having an object type corresponding to the first word of the consecutively reserved word exists under the current node, and whether the target word corresponds to the second word of the consecutively reserved word. If the above conditions are satisfied, the process proceeds to step S244. If the above conditions are not satisfied, the process proceeds to step S245.

(S244) The syntax analysis unit 123 generates a word node representing the target word, connects the word node under the current node, and selects the word node as the current node. Regarding the target word node, the classification is "word", the classification attribute is "general", the type is "object type", the value is "recognized character string", the value attribute is "general", and the preceding reserved word is "word node representing the first word". The subsequent reserved word of the word node representing the first word is set to the target word node. Next, the process proceeds to step S254.

(S245) The syntax analysis unit 123 selects the parent node, which is located one level higher than the current node, as the current node. Next, the processing returns to step S230.

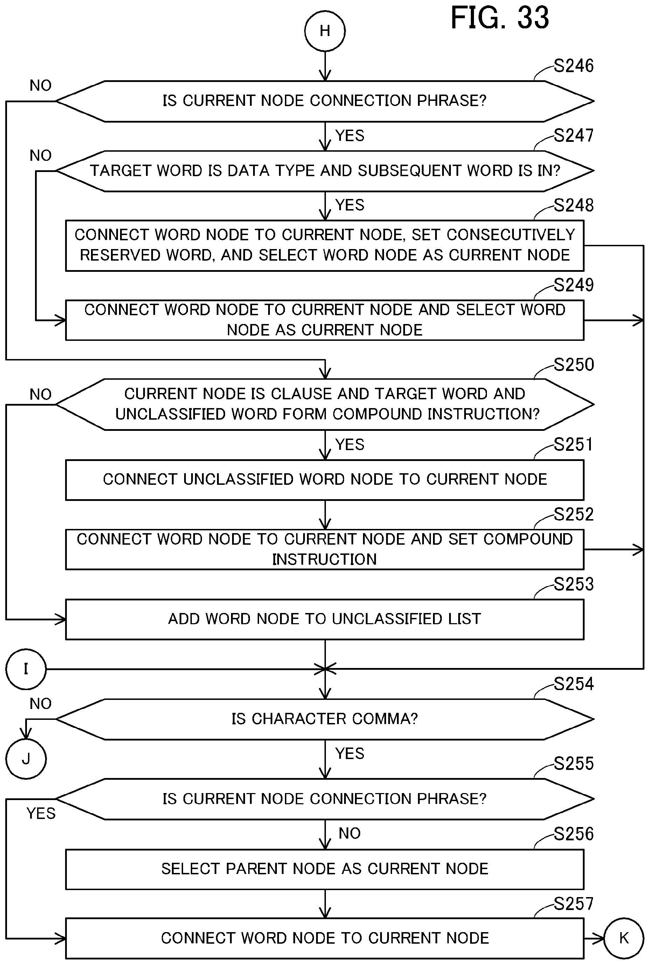

FIG. 33 is a fourth flowchart illustrating the procedure example of the statement decomposition.

(S246) The syntax analysis unit 123 determines whether the current node is a node representing a connection phrase. If the current node is a node representing a connection phrase, the process proceeds to step S247. If the current node is not a node representing a connection phrase, the process proceeds to step S250.

(S247) The syntax analysis unit 123 determines whether the target word is a data type and the subsequent word is IN. If the above conditions are satisfied, the process proceeds to step S248. If the above conditions are not satisfied, the process proceeds to step S249.

(S248) The syntax analysis unit 123 generates a word node representing the target word, connects the word node under the current word, and selects the word node as the current node. Regarding the target word node, the classification is "word", the classification attribute is "general", the type is "data type", the value is "recognized character string", the value attribute is "general", and the preceding reserved word is "word node representing IN". The subsequent reserved word of the word node representing IN is set to the target word node. Next, the process proceeds to step S254.

(S249) The syntax analysis unit 123 generates a word node representing the target word, connects the word node under the current word, and selects the word node as the current node. Regarding the word node, the classification is "word", the classification attribute is "general", the type is "identifier", the value is "recognized character string", and the value attribute is "general". Next, the process proceeds to step S254.

(S250) The syntax analysis unit 123 determines whether the current node is a node representing a clause and whether an instruction word represented by a child node under the current node, the target word, and a word in the unclassified list form a compound instruction. If the above conditions are satisfied, the process proceeds to step S251. If the above conditions are not satisfied, the process proceeds to step S253.

(S251) The syntax analysis unit 123 connects the immediately preceding word node included in the unclassified list under the current node.

(S252) The syntax analysis unit 123 generates a word node representing the target word and connects the word node under the current word. Regarding the target word node, the classification is "word", the classification attribute is "general", the value is "recognized character string", the value attribute is "general", and the preceding instruction word is a word node moved from the unclassified list. Regarding the moved word node, the subsequent instruction word is set to the target word node, and the preceding instruction word is set to the existing instruction word node under the current node. Next, the process proceeds to step S254.

(S253) The syntax analysis unit 123 generates a word node representing the target word and adds the generated word node to the unclassified list. Regarding the word node, the classification is "word", the classification attribute is "general", the type is "appropriate type", the value is "recognized character string", and the value attribute is "general".

(S254) The syntax analysis unit 123 determines whether the target character is a comma. If the target character is a comma, the process proceeds to step S255. If the target character is not a comma, the process proceeds to step S258.

(S255) The syntax analysis unit 123 determines whether the current node is a node representing a connection phrase. If the current node is a node representing a connection phrase, the process proceeds to step S257. If the current node is not a node representing a connection phrase, the process proceeds to step S256.

(S256) The syntax analysis unit 123 selects the parent node of the current node as the current node.

(S257) The syntax analysis unit 123 generates a word node representing the target word and connects the word node under the current node. Regarding the word node, the classification is "word", the classification attribute is "general", the type is "identifier", the value is "recognized character string", and the value attribute is "general". Next, the process proceeds to step S265.

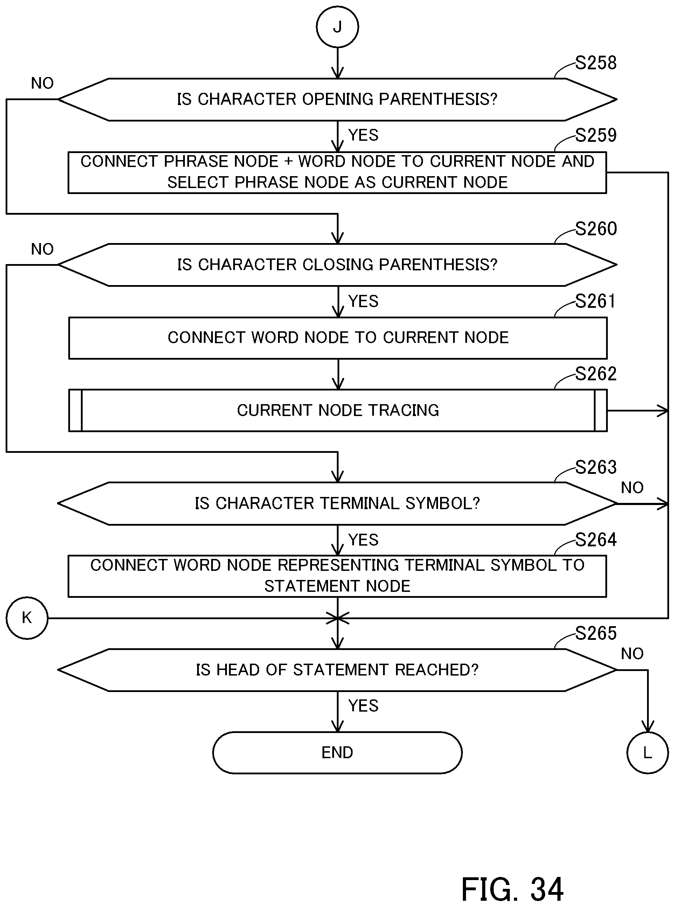

FIG. 34 is a fifth flowchart illustrating the procedure example of the statement decomposition.

(S258) The syntax analysis unit 123 determines whether the target character is an opening parenthesis. If the target character is an opening parenthesis, the process proceeds to step S259. If the target character is not an opening parenthesis, the process proceeds to step S260.

(S259) The syntax analysis unit 123 generates a phrase node representing a phrase, generates a word node representing the target word, and connects the word node under the phrase node. The type of the phrase node is a connection phrase. The type of the word node is a parenthesis. The syntax analysis unit 123 connects the phrase node under the current node and selects the phrase node as the current node. Next, the process proceeds to step S265.

(S260) The syntax analysis unit 123 determines whether the target character is a closing parenthesis. If the target character is a closing parenthesis, the process proceeds to step S261. If the target character is not a closing parenthesis, the process proceeds to step S263.

(S261) The syntax analysis unit 123 generates a word node representing the target word and connects the word node under the current node. Regarding the word node, the classification is "word", the classification attribute is "general", the type is "identifier", the value is "recognized character", and the value attribute is "general".

(S262) The syntax analysis unit 123 executes current node tracing. The current node tracing will be described below. Next, the process proceeds to step S265.

(S263) The syntax analysis unit 123 determines whether the target character is a terminal symbol. If the target character is a terminal symbol, the process proceeds to step S264. If the target character is not a terminal symbol, the process proceeds to step S265.

(S264) The syntax analysis unit 123 generates a word node representing the terminal symbol and connects the word node under the statement node. Regarding the word node representing the terminal symbol, the classification is "word", the classification attribute is "general", the type is "terminal symbol", the value is "recognized character", and the value attribute is "general".

(S265) The syntax analysis unit 123 determines whether the head of the statement is reached. If the head of the statement is reached, the syntax analysis unit 123 ends the statement decomposition. Otherwise, the process returns to step S211.

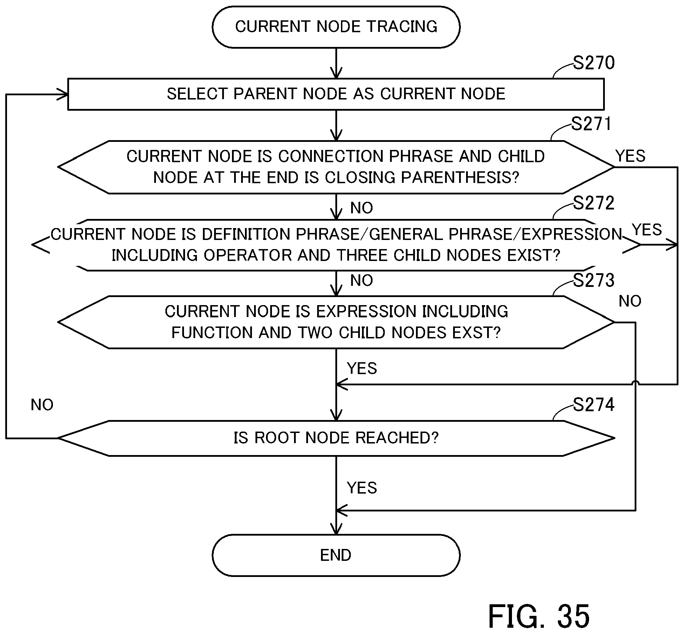

FIG. 35 is a flowchart illustrating a procedure example of the current node tracing.

This current node tracing is executed in steps S241 and S262 described above.

(S270) The syntax analysis unit 123 selects the parent node of the current node as the current node.

(S271) The syntax analysis unit 123 determines whether the current node is a node representing a connection phrase and the child node at the end under the current node is a node representing a closing parenthesis. If the above conditions are satisfied, the process proceeds to step S274. If the above conditions are not satisfied, the process proceeds to step S272.

(S272) The syntax analysis unit 123 determines whether the current node is a node representing a definition phrase, a node representing a general phrase, or a node representing an expression including an operator and whether three child nodes exist under the current node. If the above conditions are satisfied, the process proceeds to step S274. If the above conditions are not satisfied, the process proceeds to step S273.

(S273) The syntax analysis unit 123 determines whether the current node is a node representing an expression including a function and whether two child nodes exist under the current node. If the above conditions are satisfied, the process proceeds to step S274. If the above conditions are not satisfied, the syntax analysis unit 123 ends the current node tracing.

(S274) The syntax analysis unit 123 determines whether the current node has reached the root node. If the root node is reached, the syntax analysis unit 123 ends the current node tracing. If the root node is not reached, the process returns to step S270.

As described above, the information processing apparatus 100 according to the second embodiment performs syntax analysis on a source code that uses a migration-source database product and generates a syntax tree. The information processing apparatus 100 executes the specifying instructions included in the incompatibility information associated with a pair of the migration-source database product and a migration-destination database product and detects an incompatible portion in the syntax tree. If an incompatible portion is detected, the information processing apparatus 100 executes the rewriting instructions included in the incompatibility information to rewrite the syntax tree and converts the syntax tree back to the source code. The stored incompatibility information defines the search procedure and the rewriting procedure performed on the syntax tree.

As a result, the information processing apparatus 100 efficiently supports the incompatibility absorption of a user program using a database product. Specifically, the information processing apparatus 100 is capable of automatically detecting an incompatible portion in a source code and is also capable of automatically rewriting the source code such that a problem caused by the incompatible portion is eliminated. In addition, the incompatibility absorption is performed on the syntax tree generated by the syntax analysis. In this way, the incompatibility portion is specified in view of the word context, and thus, the accuracy of the incompatibility absorption is improved. Furthermore, because semantic analysis does not need to be performed, dependency on the language specifications unique to the database product is reduced, and therefore, the versatility of the syntax tree and the incompatibility information is improved.

The incompatibility information expresses characteristics of an incompatible portion that appears in the syntax tree as an instruction sequence representing a linear search procedure. This allows an engineer who performs the incompatibility absorption to intuitively create the incompatibility information and facilitates accumulation of the incompatibility information. In addition, even incompatibility having complicated conditions dependent on the context is objectively expressed in a unified format in the incompatibility information. Thus, reusability of the incompatibility information is improved.

The above description simply indicates the principle of the embodiments. Many modifications or variations may be made by those skilled in the art. The embodiments are not limited to the exact configurations and applications described above. All the relevant modifications and equivalents shall be deemed to fall within the scope of the embodiments based on the attached claims and the equivalents thereof.

### Reference Signs List

10 information processing apparatus
11 storage unit
12 processing unit
13, 14 software
15 incompatibility information
16 source code
17 syntax tree

## Claims

1. An information processing program that causes a computer to execute a process comprising:
generating, from a source code that indicates a request to first software, a syntax tree that indicates a relationship between a plurality of language elements included in the source code and attributes of each of the plurality of language elements, based on a grammar of a language used for writing the source code;
acquiring incompatibility information that is associated with a pair of the first software and second software and that indicates conditions about a relationship between and attributes of two or more language elements; and
specifying a description in the source code by searching the syntax tree for a language element that satisfies the conditions indicated by the incompatibility information, the description being incompatible with the second software.

2. The information processing program according to claim 1,
wherein the incompatibility information also indicates a rewriting method for a language element that satisfies the conditions, and
wherein the process further includes generating another source code that indicates a request to the second software by applying the rewriting method to the syntax tree.

3. The information processing program according to claim 1,
wherein the incompatibility information includes an instruction sequence that indicates a tree-structured procedure for searching for a language element that satisfies the conditions, and
wherein the instruction sequence is executed on the syntax tree.

4. The information processing program according to claim 3, wherein the searching includes executing the instruction sequence sequentially from an initial instruction to a last instruction and determining, when the instruction sequence is successfully executed till the last instruction, that the syntax tree includes a language element that satisfies the conditions.

5. The information processing program according to claim 1, wherein the conditions include a first condition that indicates attributes of a language element that serves as a starting point, a second condition that indicates a range of a relationship to be traced from the starting point, and a third condition that indicates attributes of a language element in the relationship traced.

6. The information processing program according to claim 1, wherein the attributes of each of the plurality of language elements include location information that indicates a location of the each of the plurality of language elements, a type of the each of the plurality of language elements, the type being determined based on the grammar, and a character string of the each of the plurality of language elements.

7. The information processing program according to claim 1, wherein the incompatibility information is also associated with incompatibility type information that indicates a type of error that occurs in the second software, the error being attributed to a language element that satisfies the conditions.

8. The information processing program according to claim 1,
wherein the source code includes a query indicating a database operation request, and
wherein the first software and the second software are database management software with different query language specifications.

9. An information processing method executed by a computer, the information processing method comprising:
generating, from a source code that indicates a request to first software, a syntax tree that indicates a relationship between a plurality of language elements included in the source code and attributes of each of the plurality of language elements, based on a grammar of a language used for writing the source code;
acquiring incompatibility information that is associated with a pair of the first software and second software and that indicates conditions about a relationship between and attributes of two or more language elements; and
specifying a description in the source code by searching the syntax tree for a language element that satisfies the conditions indicated by the incompatibility information, the description being incompatible with the second software.

10. An information processing apparatus comprising:
a storage unit that stores incompatibility information that is associated with a pair of first software and second software and that indicates conditions about a relationship between and attributes of two or more language elements; and
a processing unit that generates, from a source code that indicates a request to the first software, a syntax tree that indicates a relationship between a plurality of language elements included in the source code and attributes of each of the plurality of language elements, based on a grammar of a language used for writing the source code, and specifies a description in the source code by searching the syntax tree for a language element that satisfies the conditions indicated by the incompatibility information, the description being incompatible with the second software.
